(19) Europäisches Patentamt
European Patent Office
Office européen des brevets

(11) **EP 2 485 384 B1**

(12) **EUROPEAN PATENT SPECIFICATION**

(45) Date of publication and mention
of the grant of the patent:
**02.12.2015 Bulletin 2015/49**

(21) Application number: **10820178.1**

(22) Date of filing: **25.02.2010**

(51) Int Cl.:
*H02P 1/16* ^(2006.01)     *H02M 7/48* ^(2007.01)
*H02M 7/483* ^(2007.01)    *H02M 7/49* ^(2007.01)
*H02P 1/30* ^(2006.01)     *H02P 1/52* ^(2006.01)
*H02M 1/00* ^(2007.01)     *H02P 27/14* ^(2006.01)

(86) International application number:
**PCT/JP2010/053485**

(87) International publication number:
**WO 2011/040057 (07.04.2011 Gazette 2011/14)**

(54) **MOTOR STARTING METHOD**

MOTORSTARTVERFAHREN

PROCÉDÉ DE DÉMARRAGE DE MOTEUR

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **30.09.2009 JP 2009227406**

(43) Date of publication of application:
**08.08.2012 Bulletin 2012/32**

(73) Proprietors:
• **Tokyo Institute of Technology
Tokyo 152-8550 (JP)**
• **Toshiba Mitsubishi-Electric Industrial Systems
Corporation
Minato-ku,
Tokyo 108-0073 (JP)**

(72) Inventors:
• **Akagi, Hirofumi
Tokyo 152-8550 (JP)**

• **Hagiwara, Makoto
Tokyo 152-8550 (JP)**

(74) Representative: **Charrier, Rapp & Liebau
Patentanwälte
Fuggerstrasse 20
86150 Augsburg (DE)**

(56) References cited:
**WO-A1-2008/067787      WO-A1-2008/067788
JP-A- 3 036 964          JP-A- 5 068 386
JP-A- 49 133 836         JP-A- 2004 048 840
US-A1- 2008 310 205**

• **HAGIWARA M ET AL: "PWM control and
experiment of modular multilevel converters",
POWER ELECTRONICS SPECIALISTS
CONFERENCE, 2008. PESC 2008. IEEE, IEEE,
PISCATAWAY, NJ, USA, 15 June 2008
(2008-06-15), pages 154-161, XP031299968, ISBN:
978-1-4244-1667-7**

**Description**

TECHNICAL FIELD

The present invention relates to a motor starting method using an inverter for driving a motor.

Background Art

By introducing a high-voltage AC motor variable-speed drive technique using an inverter to air volume/water volume control to a fan, a blower, a compressor, or the like, larger energy saving as compared with conventional damper control can be achieved.

As a method of increasing the capacity and voltage of an inverter to cope with a large load as described above, there is a multiplexing method using a converter transformer. On the other hand, in recent years, a transformerless motor drive system using a diode clamp-type multilevel converter able to withstand high voltage has been proposed (refer to, for example, non-patent literature 1).

However, in a multilevel converter, there is voltage unevenness in a DC voltage-division capacitor. To suppress it, a voltage uniformizing circuit has to be connected to a DC link. When the number of levels of output voltage is increased, the number of clamp diodes increases, and therefore it is difficult to mount.

To address the problem, a modular multilevel inverter (MMI) which is easily mounted and adapted to use large capacity and high voltage has been proposed (refer to, for example, non-patent literatures 2 and 3).

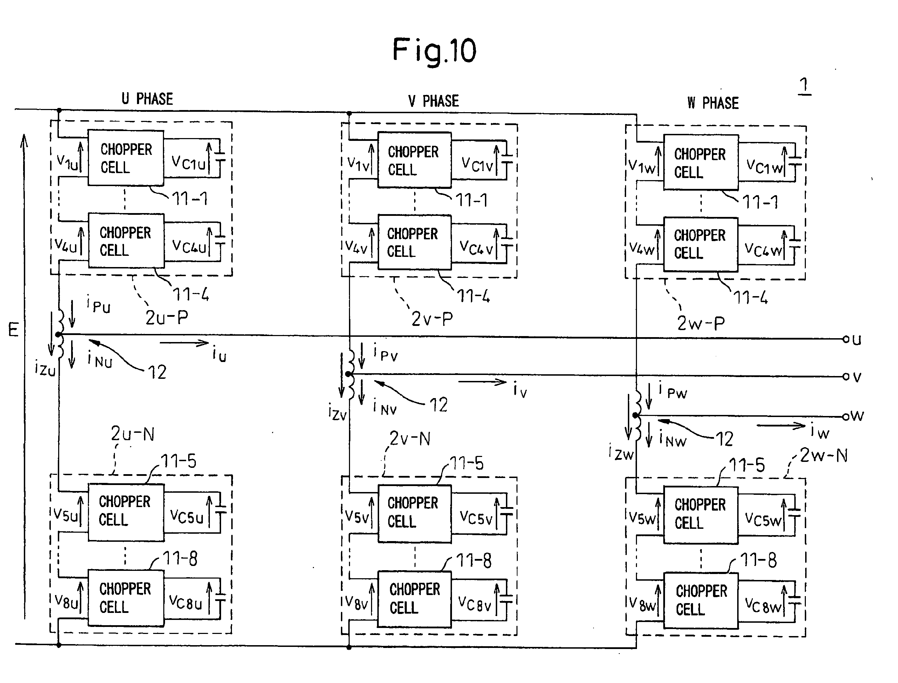

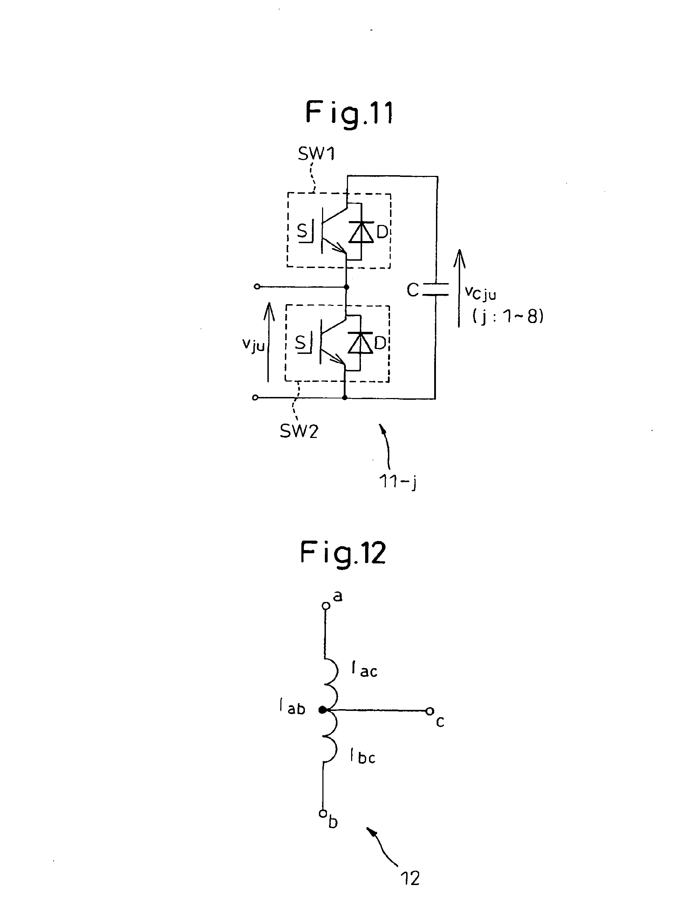

Fig. 10 is a circuit diagram showing a main circuit configuration of a modular multilevel inverter. Fig. 11 is a circuit diagram of a chopper cell as a component of the modular multilevel inverter. Fig. 12 is a circuit diagram showing a 3-terminal coupled reactor as a component of the modular multilevel inverter. Hereinafter, it is assumed that components with the same reference numeral in different drawings have the same function. Since the circuit configurations, operation principles, and control methods of the phases are similar, those of the u phase will be mainly described.

A modular multilevel inverter 1 (hereinbelow, simply called "inverter 1") shown in FIG. 10 is a full-bridge inverter of voltage types of the u phase, the v phase, and the w phase. A smoothing capacitor of large capacity (not shown) is connected to the DC side (DC link) of the inverter 1, and direct-current voltage E is applied. The direct-current voltage E does not always have to have a fixed value but may include, for example, a low-order harmonic component or a switching ripple component caused by a diode rectifier. Therefore, the smoothing capacitor may not be provided.

Each of the phases u, v, and w of the inverter 1 shown in Fig. 10 is constructed by chopper cells 11-j (where j = 1 to 8, also in the following) shown in Fig. 11 and a 3-terminal coupled reactor 12 shown in Fig. 12. With respect to the chopper cell 11-j in Fig. 10, for easier understanding, a DC capacitor C in the chopper cell 11-j shown in Fig. 11 is drawn on the outside of the chopper cell 11-j.

In the example shown in Fig. 10, for example, the number of chopper cells in each of the phases is set to eight. Consequently, an output of the inverter 1 has a PWM waveform in which the phase voltage is 9 levels and line voltage is 17 levels.

As shown in Fig. 11, the chopper cell 11-j is a 2-terminal circuit having two semiconductor switches SW1 and SW2 and the DC capacitor C and is regarded as a part of a bidirectional chopper. The chopper cell 11-j is constructed by connecting the two semiconductor switches SW1 and SW2 to each other in series and connecting the DC capacitor C in parallel to the semiconductor switches SW1 and SW2. The terminals of the semiconductor switch SW2, in the example of the drawing, out of the two semiconductor switches SW1 and SW2 are output terminals of the chopper cell 11. In the specification, the voltage value of the DC capacitor is defined as $v_{Cju}$ (where j = 1 to 8), and the value of output voltage of the chopper cell 11-j (i.e., the voltage across the semiconductor switch SW2) is defined as $v_{ju}$ in the case of the u phase.

As described above, since the inverter 1 is a voltage-type inverter, each of the semiconductor switches SW1 and SW2 is constructed by a semiconductor switching element S passing current in one direction in an on state and a feedback diode D connected to the semiconductor switching element S in inverse parallel. The semiconductor switching element S is, for example, an IGBT (Insulated Gate Bipolar Transistor).

The chopper cells 11-1 to 11-4 out of the eight chopper cells 11-1 to 11-8 in the u phase are cascaded via their output terminals. In the specification, the resultant is called a first arm 2u-P. The chopper cells 11-5 to 11-8 are cascaded via their output terminals. In the specification, this is called a second arm 2u-N. The configurations in the v phase and the w phase are similar to the above, and a first arm 2v-P, a second arm 2v-N, a first arm 2w-P, and a second arm 2 w-N are constructed. In the specification, in the u phase, current flowing in the first arm is defined as $i_{Pu}$ and current flowing in the second arm is defined as $i_{Nu}$. In the v phase, current flowing in the first arm is defined as $i_{Pv}$ and current flowing in the second arm is defined as $i_{Nv}$. In the w phase, current flowing in the first arm is defined as $i_{Pw}$ and current flowing in the second arm is defined as $i_{Nw}$. Hereinbelow, the current is referred to as "arm current".

The 3-terminal coupled reactor 12 (hereinbelow, simply called "coupled reactor 12") has a first terminal "a", a second terminal "b", and a third terminal "c" positioned on a wiring between the first and second terminals "a" and "b". In the u phase, the first arm 2u-P is connected to the first terminal "a" of the coupled reactor 12, and the second arm 2u-N is connected to the second terminal "b" of the coupled reactor 12. The third terminal "c" of the coupled reactor 12 serves as an output terminal of the u phase of the inverter 1. Similarly, in the v phase, the first arm 2v-P is connected to the first terminal "a" of the coupled reactor 12, and the second arm 2v-N is connected to the second terminal "b" of the coupled reactor 12. The third terminal "c" of the coupled reactor 12 serves as an output terminal of the v phase of the inverter 1. In the w phase, the first arm 2w-P is connected to the first terminal "a" of the coupled reactor 12, and the second arm 2w-N is connected to the second terminal "b" of the coupled reactor 12. The third terminal "c" of the coupled reactor 12 serves as an output terminal of the w phase of the inverter 1. That is, the third terminals "c" of the coupled reactors 12 in the u, v, and w phases serve as the output terminals of the u, v, and w phases of the inverter 1.

In the u phase, to each of the terminals to which the coupled reactor 12 is not connected, of the first and second arms 2u-P and 2u-N, a smoothing capacitor (not shown) of large capacity is connected, and the power source voltage E on the DC side is applied. Similarly, in the v phase, to each of the terminals to which the coupled reactor 12 is not connected, of the first and second arms 2v-P and 2u-N, the power source voltage E on the DC side is applied. In the w phase, to each of the terminals to which the coupled reactor 12 is not connected, of the first and second arms 2w-P and 2w-N, the power source voltage E on the DC side is applied.

In the specification, currents flowing from the output terminals in the u, v, and w phases of the inverter 1 (that is, for example, in the case where a motor is connected as a load of the inverter 1, current flowing in the motor) are defined as $i_u$, $i_v$, and $i_u$, respectively and is referred to as "load-side current" hereinbelow.

When the inductance of the reactor 12 is "1" in the u phase, the following circuit equation 1 is satisfied.

$$E = \sum_{j=1}^{8} v_{ju} + 1\frac{d}{dt}(i_{Pu} + i_{Nu})$$

$$\dots \quad (1)$$

It is understood from the equation 1 that a closed circuit which is not routed through the load exists. In the specification, the closed circuit will be called a "DC loop". When current circulating in the DC loop of the u phase is expressed as $i_z u$ (hereinbelow, reffered to as "circulating current"), the following relations are satisfied with the arm currents $i_p u$ and $i_N u$, and the load-side current $i_u$.

$$i_{Pu} = \frac{i_u}{2} + i_{Zu}$$

$$\dots \quad (2)$$

$$i_{Nu} = -\frac{i_u}{2} + i_{Zu}$$

$$\dots \quad (3)$$

$$i_{Zu} = \frac{1}{2}(i_{Pu} + i_{Nu})$$

$$\dots \quad (4)$$

Next, the operation principle and the control method of the inverter 1 shown in Figs. 10 to 12 mainly in the u phase will be described.

Controls on voltage $V_{Cju}$ of the DC capacitor in each of the chopper cells 11-j in the inverter 1 as the modular multilevel inverter 1 are the following two controls.

One of the controls is a control of making an average value $v_{Cuave}$ of voltages of all of the DC capacitors in the chopper cells 11-j follow desired capacitor voltage instruction value $v_c{}^*$, which is executed independently in each phase. In the specification, this control will be called "averaging control".

The other control is a control of making the voltage $v_{Cju}$ of the DC capacitor in each of the chopper cells 11-j follow desired DC capacitor voltage instruction value $v_c{}^*$. In the specification, this control will be called "balancing control".

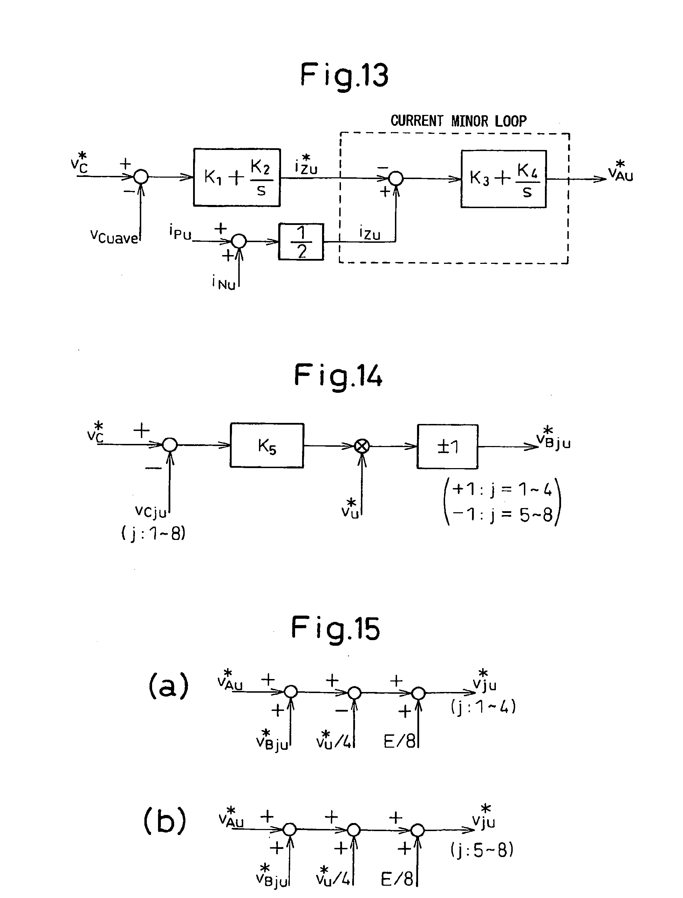

The operation principle of the averaging control will now be described. Fig. 13 is a block diagram showing the averaging control on the DC capacitors in the modular multilevel inverter. The average voltage value $v_{Cuave}$ of all of the DC capacitors in the u phase is expressed by the equation (5).

$$V_{Cuave} = \frac{1}{8} \sum_{j=1}^{8} V_{Cju} \qquad \dots \ (5)$$

Referring to Fig. 13, when $K_1$ and $K_2$ are gains, a current instruction value $i_{Zu}^*$ of the circulating current $i_{Zu}$ is expressed by the equation (6).

$$i_{Zu}^* = K_1 (v_c^* - v_{Cuave}) + K_2 \int (v_c^* - v_{Cuave}) \, dt \qquad \dots \ (6)$$

In this case, when $K_3$ and $K_4$ are gains, a voltage instruction value $V_{Au}^*$ of the averaging control is expressed by the equation (7).

$$V_{Au}^* = K_3 (i_{Zu} - i_{Zu}^*) + K_4 \int (i_{Zu} - i_{Zu}^*) \, dt \qquad \dots \ (7)$$

In the averaging control, a current minor loop for making the actual current amount $i_{Zu}$ of the circulating current follow the instruction value $i_{Zu}^*$ is constructed. The actual circulating current $i_{Zu}$ is derived from the equation (4). By controlling the circulating current $i_{Zu}$ via the current minor loop, the averaging control can be realized without exerting influence on the load current $i_u$. In the equation (6), in the case where the value $v_{Cuave}$ obtained by averaging the voltages of all of the DC capacitors is smaller than the DC capacitor voltage instruction value $v_C^*$ ($v_{Cuave} < V_C^*$), the current instruction value $i_{Zu}^*$ increases. In the case where the actual circulating current $i_{Zu}$ is smaller than the current instruction value $i_{Zu}^*$ ($i_{Zu} < i_{Zu}^*$), the output voltage $v_{ju}$ of each of the chopper cells 11-j is decreased to be smaller than the power source voltage E on the DC side and the circulating current $i_{Zu}$ is increased. On the other hand, in the case where the actual circulating current $i_{Zu}$ becomes larger than the current instruction value $i_{Zu}^*$ ($i_{Zu} > i_{Zu}^*$), the output voltage $v_{ju}$ of each of the chopper cells 11-j is increased to be larger than the power source voltage E on the DC side and the circulating current $i_{Zu}$ is decreased.

The operation principle of the balancing control will now be described. Fig. 14 is a block diagram showing the balancing control on the DC capacitors in the modular multilevel inverter. As described above, the balancing control is a control of making the voltage $v_{Cju}$ of the DC capacitor in each of the chopper cells 11-j follow desired DC capacitor voltage instruction value $v_c^*$. The voltage instruction value of the balancing control is expressed by $v_{Bju}^*$.

By forming effective power between the output voltage $v_{ju}$ of each of the chopper cells 11-j and the arm currents $i_{Pu}$ and $i_{Nu}$, the voltage $v_{Cju}$ of the DC capacitor is made follow the DC capacitor voltage instruction value $v_c^*$. For example, in each of the chopper cells 11-j (where j = 1 to 4) in the first arm 2u-P shown in Fig. 10, in the case where the voltage $v_{Cju}$ of the DC capacitor is smaller than the DC capacitor voltage instruction value $v_{Cu}^*$ ($v_{Cju} < v_{Cu}^*$), positive active current is passed to the chopper cell 11-j in order to increase the voltage $v_{Cju}$ of the DC capacitor. For this purpose, a voltage instruction value $v_{Bju}^*$ (where j = 1 to 4) of the balancing control expressed by the equation (8) is used. In this case, $K_5$ is gain.

$$v_{Bju}^* = K_5 (v_c^* - v_{Cju}) v_u^* \qquad (where \ j = 1 \ to \ 4) \quad \dots \ (8)$$

In the equation (8), $v_u^*$ expresses an instruction value of the voltage to be applied to the load. When the effective value of the line voltage instruction value is $V^*$ and frequency is f, the instruction value is expressed by the equation (9).

$$v_u^* = \sqrt{\frac{2}{3}} V^* \sin 2\pi f t \qquad \dots \ (9)$$

In the case of a motor drive, the phase of vu* and that of the load current iu can be regarded the same. In the case where the voltage $v_{Cju}$ of the DC capacitor is smaller than the DC capacitor voltage instruction value $v_c^*$ ($v_{Cju} < v_c^*$), the phase of the arm current $i_{Pu}$ and that of the voltage instruction value $v_{Bju}^*$ are the same by the equation (9). Therefore, positive effective power "$v_{Bju}^* \times i_{Pu}$" is applied to the chopper cell 11-j. On the other hand, in the case where the voltage $v_{Cju}$ of the DC capacitor is larger than the DC capacitor voltage instruction value $v^*c$ ($v_{Cju} > v^*_C$), the phase of the arm current iPu and that of the voltage instruction value $v_{Bju}^*$ are opposite to each other by the equation (9). Therefore, negative effective power "$v^*_{Bju} \times i_{Pu}$" is applied to the chopper cell 11-j.

Similarly, in each of the chopper cells 11-j (where j = 5 to 8) in the second arm 2u-P shown in Fig. 10, the voltage instruction value $v_{Bju}^*$ (where j = 5 to 8) of the balancing control expressed by the equation (10) is used. In this case, $K_5$ is gain.

$$v_{Bju}{}^* = -K_5 \left(v_c{}^* - v_{Cju}\right) v_u{}^* \qquad (where\ j\ =\ 5\ to\ 8) \qquad ...\ (10)$$

As described above, the voltage $v_{Cju}$ of the DC capacitor in each of the chopper cells 11-j in the inverter as the modular multilevel inverter is c controlled by the averaging control and the balancing control.

Generation of an output voltage instruction value used to generate switching signals for the semiconductor switches SW1 and SW2 in each of the chopper cells 11-j will be described. Figs. 15A and 15B are block diagrams showing generation of the output voltage instruction value on each of the chopper cells in the modular multilevel inverter.

The output voltage instruction value $v_{ju}^*$ of each of the chopper cells 11-j (where j = 1 to 4) in the first arm 2u-P is expressed by the equation 11. The output voltage instruction value $v_{ju}^*$ of each of the chopper cells 11-j (where j = 5 to 8) in the first arm 2u-N is expressed by the equation 12. In generation of the output voltage instruction value $v_{ju}^*$, the power source voltage E on the DC side is used as a feed-forward item.

$$v_{ju} = v_{Au}{}^* + v_{Bju}{}^* - \frac{v_u{}^*}{4} + \frac{E}{8} \qquad (where\ j\ =\ 1\ to\ 4)\ ...\ (11)$$

$$v_{ju} = v_{Au}{}^* + v_{Bju}{}^* + \frac{v_u{}^*}{4} + \frac{E}{8} \qquad (where\ j\ =\ 5\ to\ 8)\ ...\ (12)$$

The output voltage instruction value $v_{ju}^*$ generated as described above is standardized by the voltage $v_{Cju}$ of each DC capacitor. After that, the resultant value is compared with a triangle-wave carrier signal of the carrier frequency $f_C$, and a PWM switching signal is generated. The generated switching signal is used for switching the semiconductor switches SW1 and SW2 in a corresponding chopper cell 11-j. The switching frequency $f_S$ of each chopper cell 11-j is equal to the carrier frequency $f_C$. In the case where the number of chopper cells is, for example, eight, the initial phases of carrier signals corresponding to the chopper cells 11-j are shifted by 45 degrees. Specifically, the initial phase of the chopper cell 11-1 is 0 degree, that of the chopper cell 11-2 is 90 degrees, that of the chopper cell 11-3 is 180 degrees, that of the chopper cell 11-4 is 270 degrees, that of the chopper cell 11-5 is 45 degrees, that of the chopper cell 11-6 is 135 degrees, that of the chopper cell 11-7 is 225 degrees, and that of the chopper cell 11-8 is 315 degrees. The initial phases of the carrier signals of the phases are shifted by 120 degrees. Consequently, the line voltage of the output voltage of the inverter 1 has AC waveform of 17 levels, and equivalent switching frequency is 8 $f_C$.

Generation of the switching signals for the switches SW1 and SW2 in the chopper cell is realized by using an arithmetic processing unit such as a DSP or FPGA.

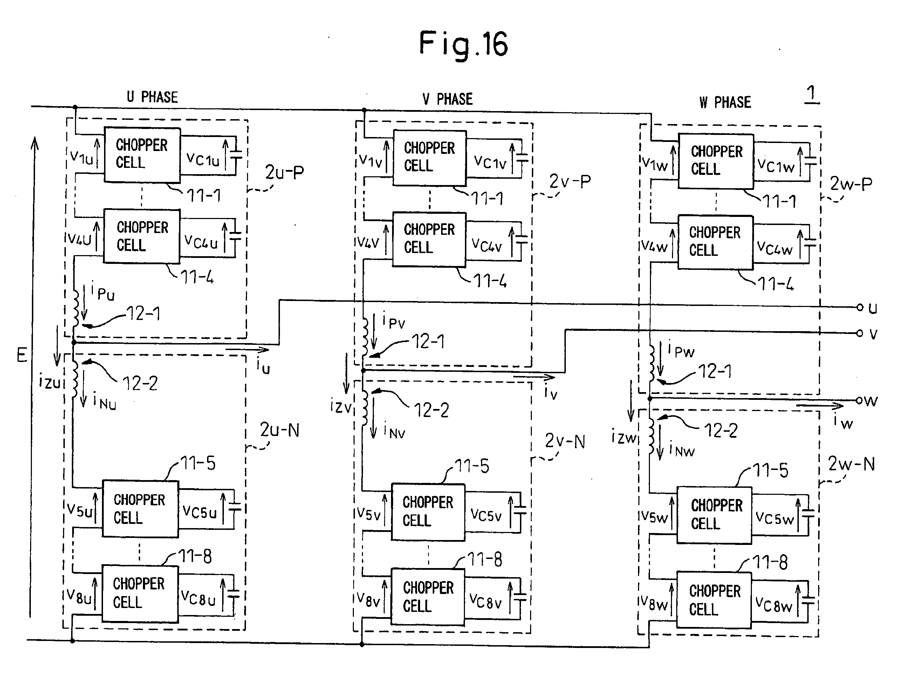

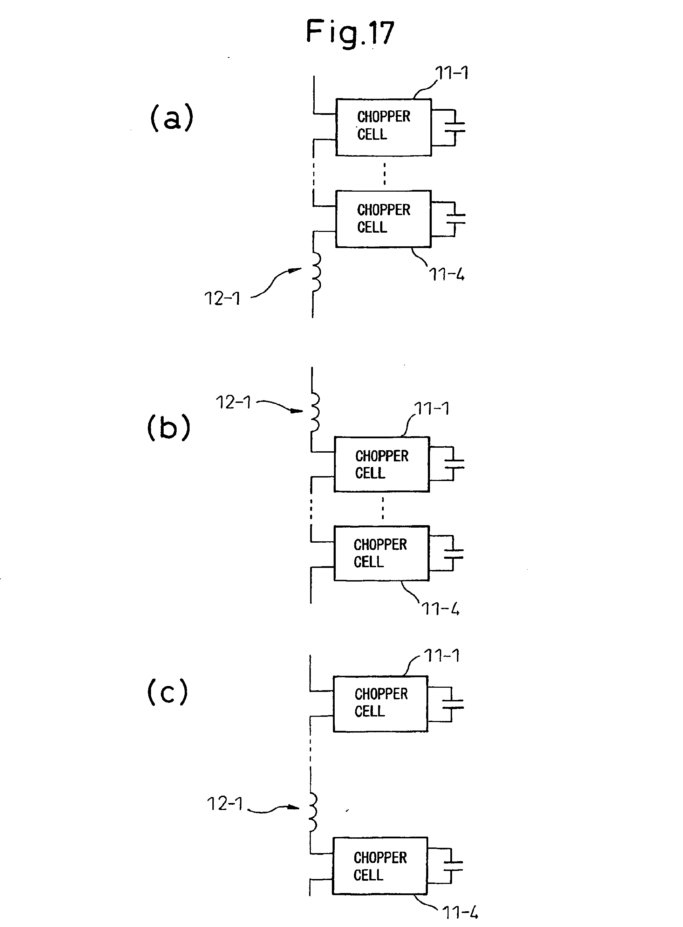

As a modification of the modular multilevel inverter 1 shown in Fig. 10, a normal reactor (that is, an uncoupled reactor) may be used in place of the 3-terminal coupled reactor. Fig. 16 is a circuit diagram showing a main circuit configuration of another example of the modular multilevel inverter. Figs. 17A to 17C are circuit diagrams showing layout examples of the reactor in the modular multilevel inverter illustrated in Fig. 16. In the examples, the chopper cells 11-j (where j = 1 to 4) and the reactor 12-1 are provided in the first arm 2u-P, and the chopper cells 11-j (where j = 5 to 8) and the reactor 12-1 are provided in the second arm 2u-N. In the first arm 2u-P, the four chopper cells 11-j (where j = 1 to 4) are cascaded via their output terminals, and the reactor 12-1 is connected in an arbitrary position in the cascaded chopper cells. In the second arm 2u-N, the four chopper cells 11-j (where j = 5 to 8) are cascaded via their output terminals, and the reactor 12-2 is connected in an arbitrary position in the cascaded chopper cells. In the modular multilevel inverter 1 shown in Fig. 16, the chopper cell 11-4 is connected to one of the terminals of the reactor 12-1, and the reactor 12-2 is connected to the other terminal. The reactor 12-1 is connected to one of the terminals of the reactor 12-2, and the chopper cell 11-5 is connected to the other terminal. DC source voltage is applied to the terminals which are not connected to each other, of the first and second arms 2u-P and 2u-N. The connected terminal of the first and second arms 2u-P and 2u-N serves as an output terminal of the u phase of the inverter 1.

In the modular multilevel inverter 1 using the uncoupled reactor as shown in Fig. 16, the reactors 12-1 and 12-2 are connected in arbitrary positions in the cascaded chopper cells 11-j. Fig. 17A shows.the first arm illustrated in Fig. 16. As other examples of the layout of the reactor, for example, as illustrated in Fig. 17B, the reactor may be connected to the terminal to which the DC source voltage is applied, of the chopper cell 11-1. As illustrated in Fig. 17C, the reactor may be connected between the chopper cells 11-3 and 11-4.

Since the other circuit components are similar to those shown in Fig. 10, the same reference numerals are designated for the same circuit components and the detailed description of the circuit components will not be repeated.

Related Art Literature

Patent Literature

US 2008/0310205 discloses a method for controlling a polyphase converter with distributed energy stores in each valve leg, whereby the switching actions of connected upper and lower valve legs are performed at freely selected intervals.

Non-Patent Literature

Non-patent literature 1: Yosuke Kondo, Hatti Natchpong, and Hirofumi Akagi, "Induction Motor Variable Drive System by 5-Level Diode-Clamped PWM Rectifier and Inverter", IEEJ Transactions on Industrial Applications, Volume 128, Number 3, pp 259 to 266, 2008
Non-patent literature 2: Makoto Hagiwara and Hirofumi Akagi, "PWM Control Method and Operation Verification of Modular Multilevel Converter (MMC)", IEEJ Transactions on Industrial Applications, Volume 128, Number 7, pp 957 to 965, July, 2008
Non-patent literature 3: Kazutoshi Nishimura, Makoto Hagiwara, and Hirofumi Akagi, "Application to High-Voltage Motor Drive System using Modular Multilevel PWM Inverter, Experimental Verification by 400V, 15 kW Mini Model", Technical Meeting on Semiconductor Power Conversion, IEE, SPC-09-24, pp 19 to 24, January, 2009
Non-patent literature 4: Makoto Hagiwara and Hirofumi Akagi, "PWM Control and Experiment of Modular Multilevel Converters", Power electronics specialists conference, 2008, PESC 2008. IEEE, IEEE Piscataway, NJ, USA, June 15, 2008, pp. 154-161

Summary of the Invention

Problem to be solved by the Invention

In the case of driving a motor by using a general inverter, variable voltage/variable frequency speed control (hereinbelow, called "V/f control") is widely used. The V/f control has a feature that constant torque operation can be realized since start of a motor until the frequency reaches rated frequency.

However, in the case of employing the V/f control to drive a motor by using the modular multilevel inverter 1, as described in the non-patent literature 3, AC voltage fluctuations whose main component is motor drive frequency occur in the voltage of a DC capacitor in the chopper cell 11-j. An AC fluctuation component $v_{C1u}'$ included in the voltage $v_{C1u}$ of the DC capacitor in the chopper cell 11-1 in Fig. 10 can be approximated by equations 13 and 14 as described in the non-patent literature 3.

$$v_{C1u}' = \frac{\Delta V_{C1u}}{2} \cos 2\pi f t$$

$$\dots (13)$$

$$\Delta V_{C1u} \fallingdotseq \frac{\sqrt{2}I}{4\pi f C}$$

$$\dots (14)$$

In this case, $\Delta V_{C1u}$ indicates maximum voltage fluctuation of $v_{C1u}'$, I indicates an effective value of current flowing in the motor (hereinbelow, simply called "motor current"), f denotes output frequency of the modular multilevel inverter 1, and C expresses capacitance of the DC capacitor in the chopper cell 11-1.

From the expressions 13 and 14, the AC fluctuation component $v_{C1u}'$ is proportional to the effective value I of the motor current and is inverse proportional to the output frequency f. Therefore, when the V/f control in which starting current almost equal to rated current is generated in a low frequency domain is applied to the motor driving using the modular multilevel inverter 1, the AC voltage fluctuation which is a few times as large as that in the rated frequency operation occurs at the start of the motor.

As described above, the motor driving using the modular multilevel inverter has a problem that unstable operation occurs at the start of a motor.

Therefore, in view of the problem, an object of the present invention is to provide a motor starting method for stably starting a motor by using a modular multilevel inverter.

Means for Solving the Problem

To realize the object, in a first mode of the present invention, an inverter used for starting a motor is a modular multilevel inverter according to claim 1.

In a second mode of the invention, an inverter used for starting a motor is a modular multilevel inverter according to claim 2.

The first and second control steps in the first to second modes of the present invention are realized by detecting arm currents flowing in the first and second arms of the modular multilevel inverter, voltage of the DC capacitor in each of the chopper cells, DC link voltage, and currents in different phases output from the inverter (i.e., current in different phases flowing in a motor as a load) by known detectors and performing arithmetic process by an arithmetic processor such as a DSP using the detection result.

Effect of the Invention

According to the present invention, AC voltage fluctuations in a DC capacitor in a modular multilevel inverter used for driving a motor are suppressed, and the motor can be started stably. The present invention has excellent characteristics such as easiness of control, suppression of electromagnetic noise (EMI), and reduction in torque pulsation. Although the starting torque which can be generated is limited to about 40% of the rated torque, the invention can be applied to a control of a square reduction torque load such as a fan, a blower, a pump, or a compressor.

Brief Description of Drawings

Fig. 1 is a flowchart showing the operation flow of a motor starting method as a first embodiment of the present invention.

Fig. 2 is a circuit diagram showing a modular multilevel inverter in the first embodiment and a third embodiment of the invention.

Fig. 3 is a diagram showing experiment results on the motor starting method as the first embodiment of the invention.

Fig. 4 is an enlarged diagram of Fig. 3.

Fig. 5 is a diagram showing simulation results on the motor starting method as the first embodiment of the invention.

Fig. 6 is an enlarged diagram of Fig. 5.

Fig. 7 is a diagram showing a circuit used for the experiment and simulation on the motor starting method as the first embodiment of the invention.

Fig. 8 is a circuit diagram showing a modular multilevel inverter in second and fourth embodiments of the invention.

Fig. 9 is a flowchart showing the operation flow of a motor starting method as a third embodiment of the present invention.

Fig. 10 is a circuit diagram showing a main circuit configuration of a modular multilevel inverter.

Fig. 11 is a circuit diagram showing a chopper cell as a component of the modular multilevel inverter.

Fig. 12 is a circuit diagram showing a 3-terminal coupled reactor as a component of the modular multilevel inverter.

Fig. 13 is a block diagram showing averaging control of a DC capacitor in the modular multilevel inverter.

Fig. 14 is a block diagram showing balancing control of a DC capacitor in the modular multilevel inverter.

Figs. 15A and 15B are block diagrams showing generation of an output voltage instruction value on each of chopper cells in the modular multilevel inverter.

Fig. 16 is a circuit diagram showing a main circuit configuration of another example of the modular multilevel inverter.

Figs. 17A to 17C are circuit diagrams showing layout examples of a reactor in the modular multilevel inverter illustrated in Fig. 16.

Modes for carrying out the Invention

Although mainly the u phase will be described in first to fourth embodiments, the v phase and the w phase are similar. In each of the embodiments, the number of chopper cells is eight. However, the invention, is not limited to the number. The number of chopper cells may be any even number.

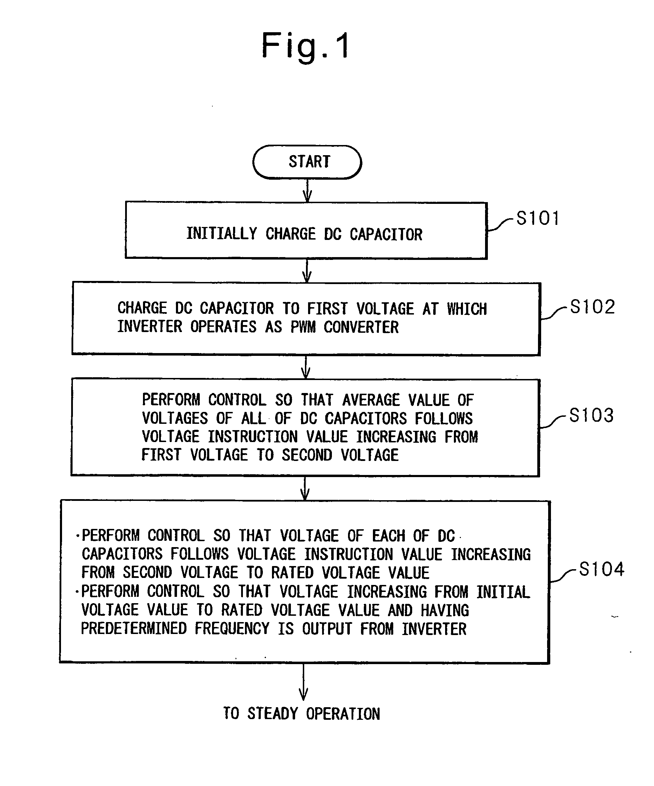

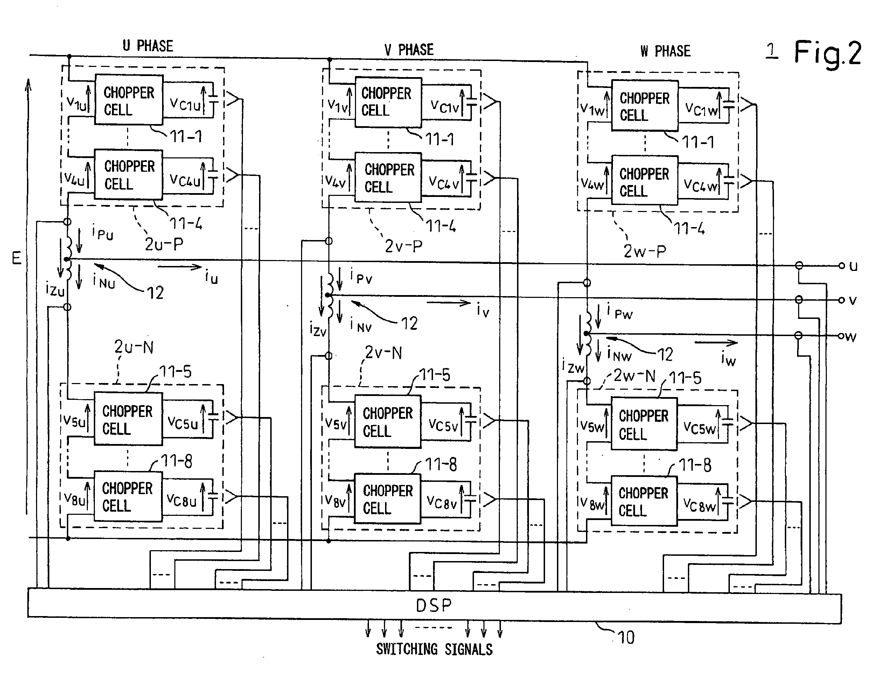

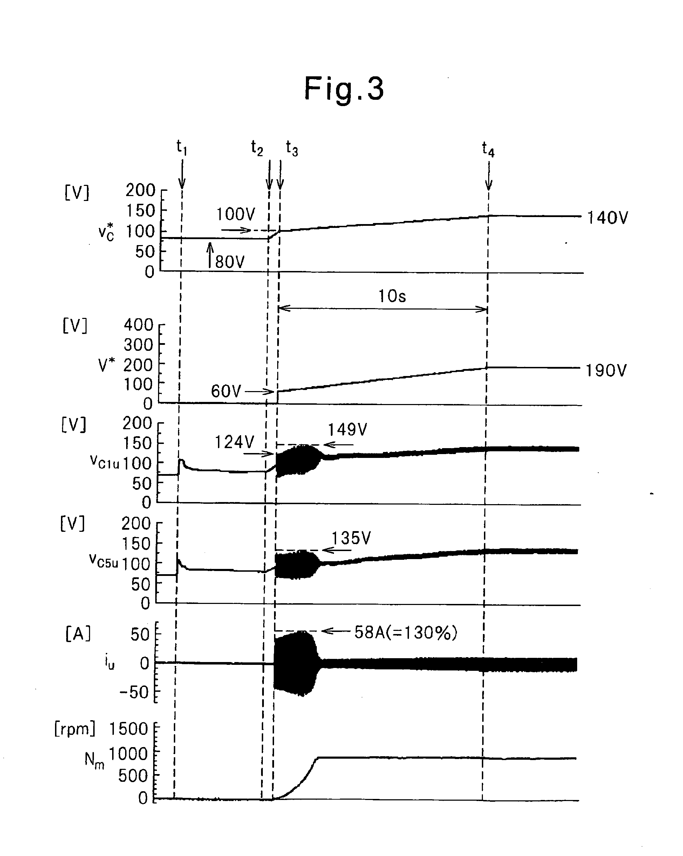

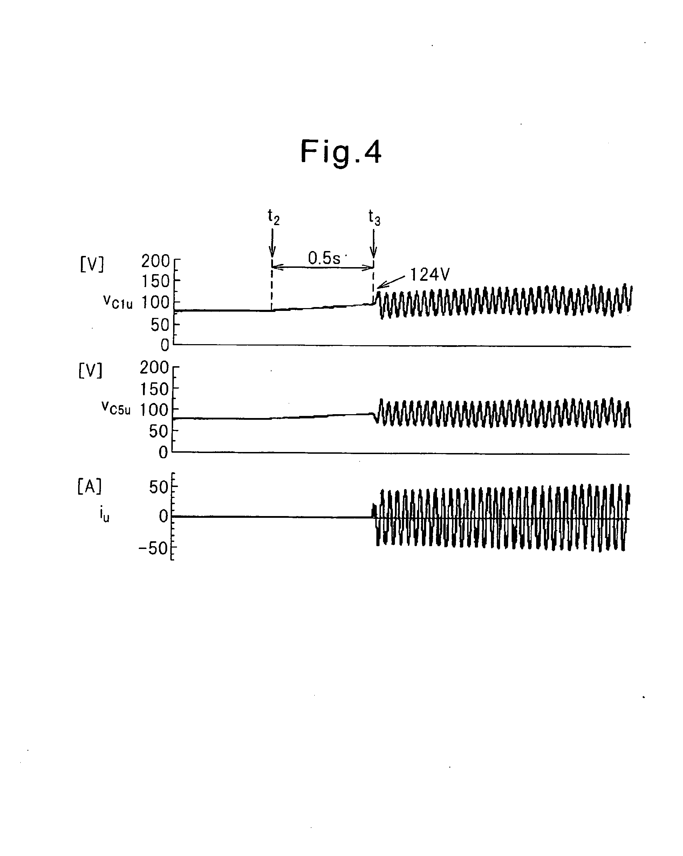

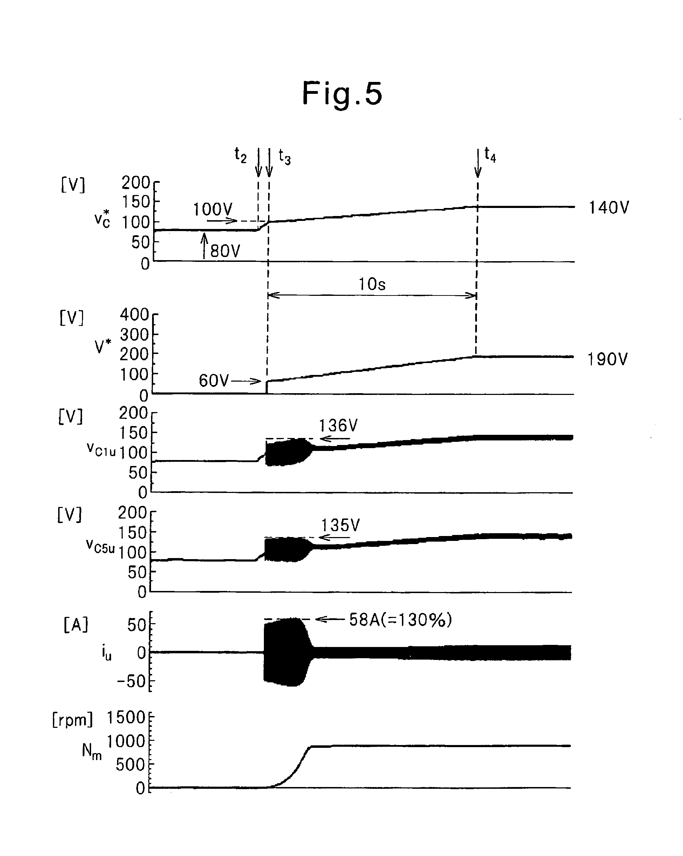

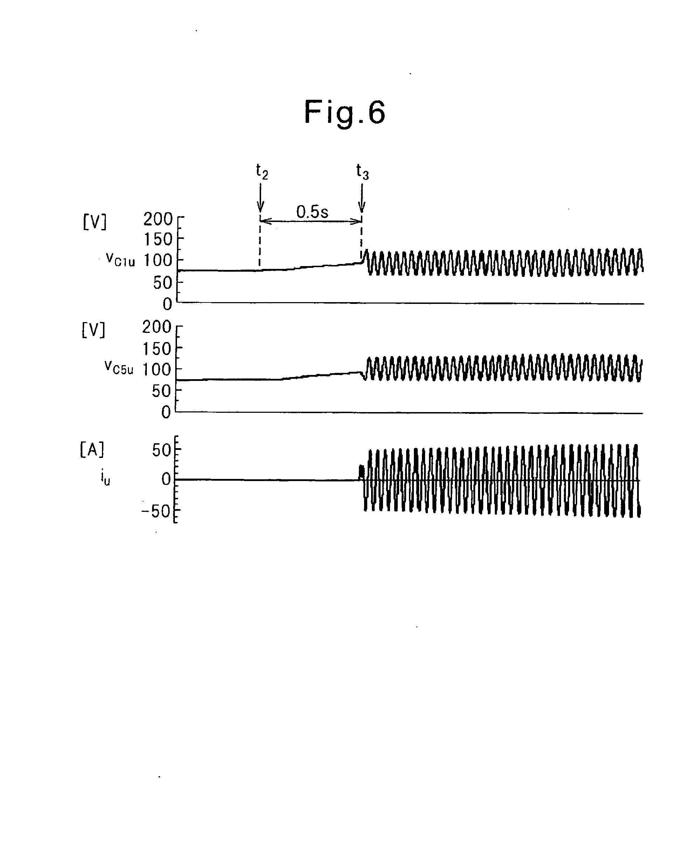

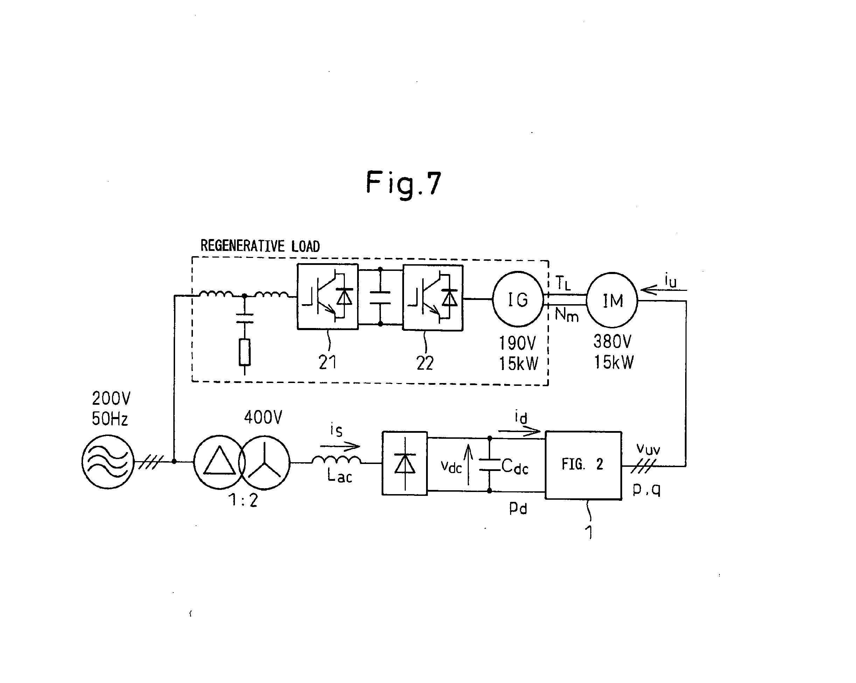

Fig. 1 is a flowchart showing the operation flow of a motor starting method as a first embodiment of the present invention. Fig. 2 is a circuit diagram showing a modular multilevel inverter in the first embodiment and a third embodiment of the invention. Fig. 3 is a diagram showing experiment results on the motor starting method as the first embodiment of the invention. Fig. 4 is an enlarged diagram of Fig. 3. Fig. 5 is a diagram showing simulation results on the motor starting method as the first embodiment of the invention. Fig. 6 is an enlarged diagram of Fig. 5. Fig. 7 is a diagram showing a circuit used for the experiment and simulation on the motor starting method as the first embodiment of the invention.

The motor starting method of the first embodiment of the invention relates to a case of using the modular multilevel inverter described with reference to Fig. 10 to Figs. 15A and 15B to drive a motor. The circuit configuration of the modular multilevel inverter 1 shown in Fig. 2 is similar to that of Fig. 10, the chopper cell 11-j is that shown in Fig. 11, and the 3-terminal coupled reactor 12 is that shown in Fig. 12. Similarly, each of the semiconductor switches SW1 and SW2 in the chopper cell 11-j has the semiconductor switching element S passing current in one direction in an on state and the feedback diode D connected to the semiconductor switching element S in inverse parallel.

As illustrated in Fig. 2, the switching signal used to instruct the switching operation of the semiconductor switches SW1 and SW2 in each of the chopper cells 11-j of the modular multilevel inverter 1 is generated by a DSP indicated by reference numeral 10. To the DSP 10, the arm currents $i_{Pu}$, $i_{Pv}$, and $i_{Pw}$ flowing in the first arms 2u-P, 2v-P, and 2w-P in the modular multilevel inverter 1, the arm currents $i_{Nu}$, $i_{Nv}$, and $i_{Nw}$ flowing in the second arms 2u-N, 2v-N, and 2w-N, the voltages $v_{Cju}$, $v_{Cjv}$, and $v_{Cjw}$ in the DC capacitors in the chopper cells 11-j, and currents $i_u$, $i_v$, and $i_w$ of the phases output from the inverter 1 (i.e., current of the phases flowing in the motor as a load) are supplied, and arithmetic process is executed.

For the experiments and simulations, the circuit shown in Fig. 7 was used. Table 1 shows the circuit constant of the circuit illustrated in Fig. 7.

Table 1 Circuit Constant

| Rated active power | P | 15 kW |
|---|---|---|
| Rated line voltage effective value | $V_S$ | 400V |
| System frequency | fs | 50 Hz |
| DC voltage | E | 540 V |
| Coupled inductor | $l_{ab}$ | 4.0 mH |
| Capacitance of DC capacitor in chopper cell | C | 3.3 mF |
| DC capacitor voltage | Vc | 140 V |
| Circuit constant | H | 52 ms |
| Carrier frequency | fc | 1 kHz |
| AC inductor | $L_{ac}$ | 1.75 mH |
| Capacitance of DC capacitor on DC link side | $C_{dc}$ | 3.9 mF |
| Circuit constant | $H_{dc}$ | 38 ms |

The control system in the experiments and simulations was realized by all digital control based on a DSP and an FPGA, dead time was 4 μs, and the carrier frequency $f_c$ of each of the chopper cells 11-j was 1 kHz. As the motor as a load, an induction motor IM of 280V and 15 kW rated and whose number of electrode pairs is two was used. Table 2 shows the specifications of the induction motor used as a load in the experiments and simulations.

Table 2 Specifications of Induction Motor

| Rated output | P | 15 kW |
|---|---|---|

(continued)

| Rated line voltage effective value | V | 380 V |
|---|---|---|
| Rated frequency | f | 50 Hz |
| Rated current effective value | I | 32 A |
| The number of electrode pairs | p | 2 |
| Inertia moment | J | 0.2 kg·m² |

Regenerative load shown in Fig. 7 is used to simulate start load torque of the motor driven by the inverter 1 and is constructed by an induction generator IG of 190V and 15 kW rated and whose number of electrode pairs is two and converters 21 and 22 having a BTB (Back-to-Back) configuration. By applying vector control, instantaneous load torque $\tau L$ of the induction motor IM is made variable.

In measurement of experiment waveforms, when "S/second" is set to the number of sampling times per second, the sampling speed is 1 kS/second (i.e., sampling in 1,000 points is performed in one second) in Fig. 3 and is 10 kS/second (i.e., sampling in 10,000 points is performed in one second) in Fig. 4.

In Figs. 3 and 4, $v_C^*$ indicates a voltage instruction value of the DC capacitor in the chopper cell 11-j, V* indicates a line voltage effective value of the instruction value of the voltage applied to the motor (i.e., output voltage of the inverter 1), $v_{C1u}$ and $v_{C5u}$ are voltages of the DC capacitors in the chopper cells 11-1 and 11-5 of the u phase, respectively, $i_u$ denotes current flowing in the motor (motor current), and $N_m$ indicates the rotational speed of the motor.

With reference to the results of the experiments and simulations using the above-described circuits, the operation of the motor starting method in the first embodiment of the invention will be described mainly with respect to the u phase. As described above, each of the arithmetic processes in steps are executed by the DSP 10.

In an initial state where the DC capacitor in each of the chopper cells 11-j of the inverter 1 is not charged yet, in first charging step S101 in Fig. 1, the semiconductor switches SW1 and SW2 in the inverter 1 are turned off to initially charge the DC capacitor. In the case where the switching elements S in the semiconductor switches SW1 and SW2 in the chopper cell 11-1 shown in Fig. 11 are turned off, by the DC voltage E on the DC link side in the inverter 1, current flows in a feedback diode D (the upper side in the diagram) to which the DC voltage is applied in the forward direction out of two feedback diodes D in the chopper cell, and the DC capacitor C is charged. On the other hand, no current flows in the feedback diode D (the lower side in the diagram) to which the DC voltage is applied in the inverse direction. In the circuit shown in Fig. 7, eight chopper cells 11-j exist, so that each of the DC capacitors is charged to 70V (about 540V/8). Also in the experiment result shown in Fig. 3 and the simulation result shown in Fig. 5, the voltages $v_{Cju}$ and $v_{C5u}$ of the DC capacitors in the chopper cells 11-1 and 11-5 are about 70V. In the experiments and simulations, the DC capacitors were initially charged to time $t_1$.

Subsequently, in second charging step S102 in Fig. 1, the average value $v_{Cuave}$ of the voltages of all of the DC capacitors is controlled to reach a first voltage value larger than a voltage value at which the inverter 1 operates as a PWM converter. Specifically, in the second charging step S102, the operation of switching the switch elements SW1 and SW2 in each of the chopper cells 11-j in the inverter 1 is started and the above-described "averaging control" is executed on the voltage of the DC capacitors. As described above, the averaging control includes a control of making the value $i_{Zu}$ of the circulating current which is the half of the sum of the current $i_{Pu}$ flowing in the first arm and the current $i_{Nu}$ flowing in the second arm follow the current instruction value $i_U^*$ generated by using the DC capacitor voltage instruction value $v_C^*$ and the average value $v_{Cuave}$ of the voltages of all of the DC capacitors.

To make the inverter 1 operate as a PWM converter, the DC capacitors have to be charged to a voltage value larger than the voltage value of the DC capacitor charged in the first charging step S101. In the circuit shown in Fig. 7, the DC capacitor is charged to 70V in the first charging step. To make the inverter 1 as a PWM converter, the voltage instruction value $v_C^*$ (corresponding to the first voltage value) of the DC capacitor was set to 80V at time $t_1$. As a result, as shown in the experiment result shown in Fig. 3 and the simulation result shown in Fig. 5, the voltages $v_{C1u}$ and $v_{C5u}$ of the DC capacitors in the chopper cells 11-1 and 11-5 became about 80V after the time $t_1$. Overshoot occurs in the voltages $v_{C1u}$ and $v_{C5u}$ of the DC capacitors in the chopper cells 11-1 and 11-5 immediately after the time $t_1$ for a reason that PI control is used for the averaging control.

Subsequently, in first control step S103 in Fig. 1, the inverter is controlled so as to make the capacitor voltage instruction value $v_C^*$ which increases from the first voltage value to a second voltage value follow the average value $v_{Cuave}$ of the voltages of all of the DC capacitors. Specifically, in the first control step S101, the "averaging control" is executed on the voltage of the DC capacitor. As described above, the averaging control includes a control of making the value $i_{Zu}$ of the circulating current which is the half of the sum of the current $i_{Pu}$ flowing in the first arm and the current $i_{Nu}$ flowing in the second arm follow the current instruction value $i_U^*$ generated by using the DC capacitor voltage instruction value $v_C^*$ and the average value $v_{Cuave}$ of the voltages of all of the DC capacitors. The first voltage value is, as described above, larger than the value of the voltage with which the inverter 1 can operate as a PWM converter. The second voltage value is a voltage value with which the inverter 1 can output the initial voltage applied to the motor IM. In the circuit shown in Fig. 7, the voltage instruction value $v_C{}^*$ of the DC capacitor which was 80V (the first voltage value) at time $t_2$ is increased like a ramp function to become 100V at time $t_3$. The "ramp function" is just an example. As long as the second voltage value becomes larger than the first voltage value, any increasing function such as a step function may be used. It is understood from the experiment result in Fig. 3 and the simulation result in Fig. 5 that the voltages $v_{C1u}$ and $v_{C5u}$ of the DC capacitors in the chopper cells 11-1 and 11-5 increase from the time $t_2$ to time $t_3$. In the experiments and simulations, the period between the time $t_2$ to the time $t_3$ is 0.5 second.

It is sufficient to set the second voltage value with which the value of initial voltage applied from the inverter 1 to the motor IM can be output as follows. When the voltage value of the power source on the DC side of the inverter 1 is E, the voltage value of any of the DC capacitors is $v_{Cju}$, and the number of chopper cells is 2n, the line voltage effective value V of the voltage output from the inverter satisfies the relational equation (15). When the number of chopper cells is 8, n = 4.

$$V = n \times \sqrt{\frac{3}{2}} \left( v_{Cju} - \frac{E}{2n} \right)$$

(where $j = 1$ to $2n$)         ... (15)

For example, when the voltage $v_{Cju}$ of the DC capacitor is 100V and the voltage value E of the power source on the DC side is 540V, the relation of "V $\leq$ 159V" is obtained from the equation (15). Therefore, the inverter 1 can output an initial voltage of 159V or less to the motor IM.

When the equation (15) is used, the voltage value of the power source on the DC side of the inverter is E, the second voltage value is $v_C{}^*$, and the total number of chopper cells of the first and second arms is 2n (where n is an integer), the line voltage effective value V of the initial voltage value is expressed by the equation (16).

$$V = n \times \sqrt{\frac{3}{2}} \left( v_C{}^* - \frac{E}{2n} \right)$$

(where $j = 1$ to $2n$)         ... (16)

Subsequently, in the second control step S104 in Fig. 1, in a predetermined period, the voltage instruction value $v_C{}^*$ of the DC capacitor which increases from the second voltage value to the rated voltage value of the DC capacitor is controlled to follow the voltage $v_{Cju}$ of each of the DC capacitors, and the voltage having predetermined frequency lower than the power source frequency which increases from the initial voltage value to the rated voltage value of the motor IM is controlled to be output from the third terminal of the 3-terminal coupled reactor 12. As described above, an output from the third terminal of the 3-terminal coupled reactor 12 is an output of the inverter 1.

The control on the voltage of each of the DC capacitors in the second control step S104 will now be described. After the second control step S104, as control on the voltage of each of the DC capacitors, the averaging control and the balancing control are executed. Specifically, the control of making the voltage $v_{Cju}$ of each of the DC capacitors follow the capacitor voltage instruction value $v_C{}^*$ in the second control step S104 includes the averaging control of making the average value $v_{Cuave}$ of the voltages of all of the DC capacitors follow the capacitor voltage instruction value $v_C{}^*$ and the balancing control of making the voltage $v_{Cju}$ of each of the DC capacitors follow the DC capacitor voltage instruction value $v_C{}^*$. As described above, the averaging control includes the control of making the value $i_{Zu}$ of the circulating current which is the half of the sum of the current $i_{Pu}$ flowing in the first arm and the current $i_{Nu}$ flowing in the second arm follow the current instruction value $i_U{}^*$ generated by using the DC capacitor voltage instruction value $v_C{}^*$ and the average value $v_{Cuave}$ of the voltages of all of the DC capacitors. In the circuit shown in Fig. 7, the voltage instruction value $v_C{}^*$ of the DC capacitor which was 100V (the second voltage value) at time $t_3$ is increased like a ramp function to become 140V as the rated voltage value at time $t_4$. The "ramp function" is just an example, and any increasing function may be used. In the experiments and simulations, the period between the time $t_3$ to the time $t_4$ is 10 seconds, which will be described later. It is understood from the experiment results in Figs. 3 and 4 and the simulation result in Fig. 5 that the voltages $v_{C1u}$ and $v_{C5u}$ of the DC capacitors in the chopper cells 11-1 and 11-5 increase from the time $t_3$ to time $t_4$. Particularly, as shown in Figs. 4 and 6, in the voltages $v_{C1u}$ and $v_{C5u}$ of the DC capacitors in the chopper cells 11-1 and 11-5, AC voltage fluctuations of 30 Hz as the same frequency as that of the starting current occur. The fluctuations occur around 100V as a center, and the maximum value is 149V. It is therefore understood that no overvoltage occurs at the time of starting in the motor starting method of the embodiment.

The output of the inverter 1 in the second control step S104 will now be described. A voltage having a predetermined frequency lower than the frequency of the power source which increases from the initial voltage value to the rated voltage value of the motor IM is controlled to be output from the third terminal of the 3-terminal coupled reactor 12. In the circuit shown in Fig. 7, at the time $t_3$ when the voltage instruction value $v_C^*$ of the DC capacitor reaches 100V, the inverter 1 can output the initial voltage of 159V or less to the motor IM. As an example, the initial voltage is set to 60V. The rated voltage of the motor IM in the circuit shown in Fig. 7 is 190V. That is, in the second control step S104, the effective value V* of the line voltage instruction value of the motor IM which was 60V at the time $t_3$ is increased like a ramp function to become 190V at the time $t_4$. The "ramp function" is just an example, and any increasing function may be used. Further, the frequency of the output voltage of the inverter 1 in the second control step S104 is set to a predetermined frequency which is higher than 0 Hz and lower than the power source frequency. In the case where the power source frequency is 50 Hz, the frequency of the output voltage of the inverter 1 is set to, for example, 30 Hz.

By the second control step S104, the starting current flows in the motor IM to generate the starting torque. As a result, the rotational speed $N_m$ of the motor increases. As shown in the experiment result of Fig. 3, the motor current $i_U$ increases with the rise of the effective value V* of the line voltage instruction value of the motor IM and reaches 58A at the maximum. To suppress the maximum value of the motor current $i_U$, it is sufficient to set the period from the time $t_3$ to the time $t_4$ as the rise time of the effective value V* of the line voltage instruction value of the motor IM to be long. In the experiment and simulation, the period between the time $t_3$ to the time $t_4$ was set to 10 seconds. In practice, the period may be properly set and changed according to the inertia moment of the load such as a fan or a blower from the viewpoint of suppressing the maximum current.

After that, the motor performs steady operation. The experiment results of Figs. 3 and 4 and the simulation results of Figs. 5 and 6 were obtained on the basis of the same parameters of the circuit of Fig. 7. The results such as the maximum value of the motor current $i_U$, the rise time of the rotational speed $N_m$ of the motor IM, and the time axis enlarged waveforms shown in Figs. 4 and 6 excellently match, and the effectiveness of the motor starting method of the embodiment is shown.

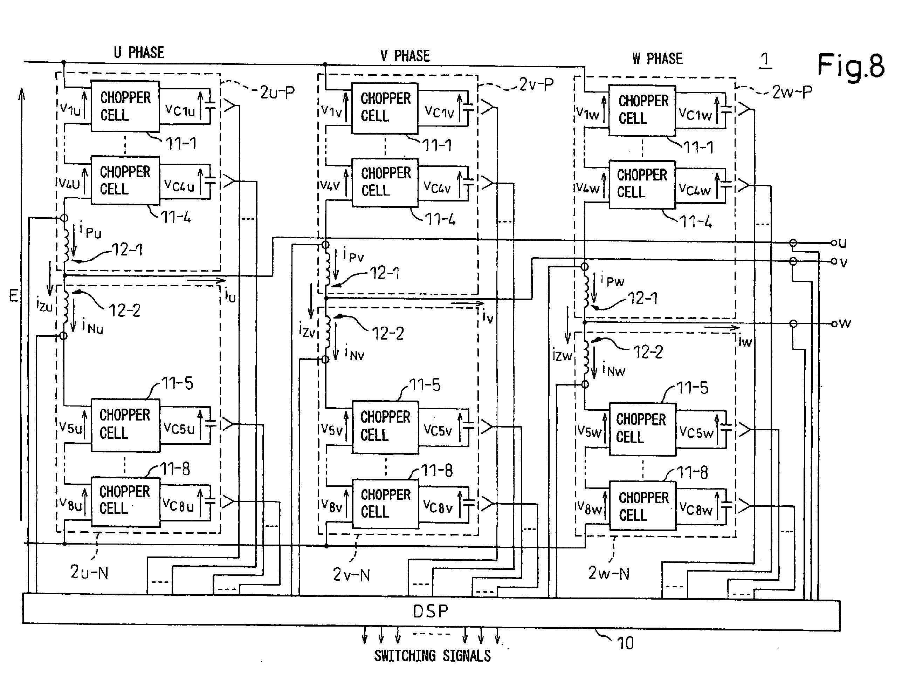

In the first embodiment, the 3-terminal coupled reactor is used. Also in the case of employing the modular multilevel inverter using the uncoupled reactor described with reference to Fig. 16, the operation principle of the motor starting method in the first embodiment can be applied. In the specification, this case is dealt as a second embodiment. Fig. 8 is a circuit diagram showing a modular multilevel inverter in second and fourth embodiments of the invention. In the second embodiment of the invention, the 3-terminal coupled reactor 12 in Fig. 2 is replaced with uncoupled reactors 12-1 and 12-2 in Fig. 8. Although the output terminal of the inverter 1 is the third terminal of the 3-terminal coupled reactor 12 in the first embodiment, in the second embodiment, in the case of the u phase, the output terminal of the inverter 1 is a connection terminal of the first and second arms 2u-P and 2u-N. The other circuit components and the operation principle and the control method of the motor starting method using the inverter 1 are similar to those of the first embodiment described with reference to Figs. 1 to 7.

In a third embodiment of the invention, the motor IM is started by using the modular multilevel inverter 1 shown in Fig. 2 which is the same as that of the first embodiment but the step S104 in the first embodiment is replaced.

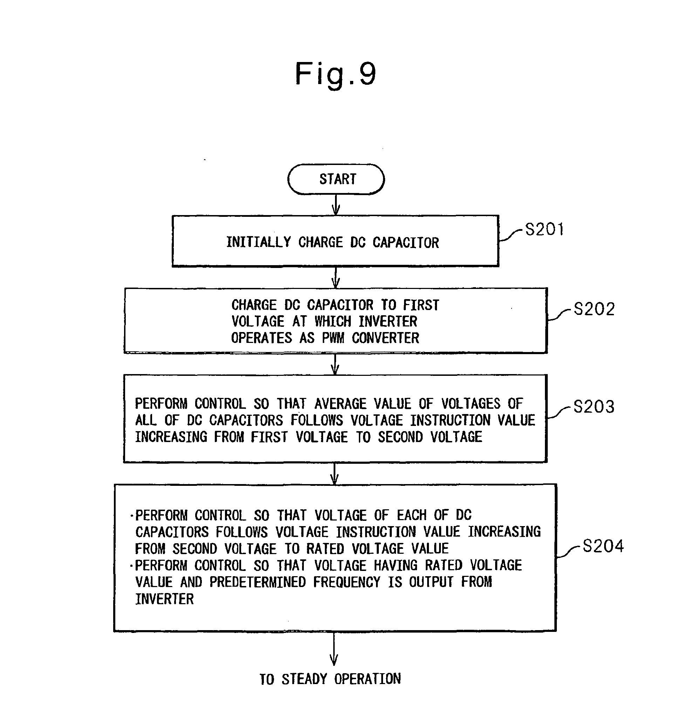

Fig. 9 is a flowchart showing the operation flow of a motor starting method in the third embodiment of the present invention. A first charging step S201, a second charging step S202, and a first control step S203 in the third embodiment shown in Fig. 9 are similar to the first charging step S101, the second charging step S102, and the first control step S103 in the first embodiment shown in Fig. 2, respectively and are as described above.

In the second control step S204 in Fig. 9, the capacitor voltage instruction value $v_C^*$ which increases from the second voltage value to a rated voltage value of the DC capacitor follow the voltage $v_{Cju}$ of each of the DC capacitors, and the voltage of the rated voltage value having the predetermined frequency lower than the power source frequency is controlled to be output from the third terminal of the 3-terminal coupled reactor 12. As described above, an output from the third terminal of the 3-terminal coupled reactor 12 is an output of the inverter 1.

The control on the voltage of each of the DC capacitors in the second control step S204 is similar to the control on the voltage of each of the DC capacitors in the second control step S104 in the first embodiment. As the controls on the voltage of each of the DC capacitors, the averaging control and the balancing control are executed. That is, the control of making the voltage $v_{Cju}$ of each of the DC capacitors follow the capacitor voltage instruction value $v_C^*$ in the second control step S104 includes the averaging control of making the average value $v_{Cuave}$ of the voltages of all of the DC capacitors follow the capacitor voltage instruction value $v_C^*$ and the balancing control of making the voltage $v_{Cju}$ of each of the DC capacitors follow the DC capacitor voltage instruction value $v_C^*$. As described above, the averaging control includes the control of making the value $i_{Zu}$ of the circulating current which is the half of the sum of the current $i_{Pu}$ flowing in the first arm and the current $i_{Nu}$ flowing in the second arm follow the current instruction value $i_{Zu}^*$ generated by using the DC capacitor voltage instruction value $v_C^*$ and the average value $v_{Cuave}$ of the voltages of all of the DC capacitors.

The output of the inverter 1 in the second control step S204 will now be described. A voltage of a rated voltage value having a predetermined frequency lower than the power source frequency is controlled to be output from the third terminal of the 3-terminal coupled reactor 12. In the circuit shown in Fig. 7, the inverter 1 controls to output the voltage of 190V as the rated voltage value at 30 Hz from the third terminal of the 3-terminal coupled reactor 12.

In the third embodiment, the 3-terminal coupled reactor is used. Also in the case of employing the modular multilevel inverter using the uncoupled reactor described with reference to Fig. 16, the operation principle of the motor starting method in the third embodiment can be applied. In the specification, this case is dealt as a fourth embodiment. The circuit diagram of the modular multilevel inverter in the fourth embodiment is similar to that of Fig. 8 and is similar to that in the second embodiment. Specifically, although the output terminal of the inverter 1 in the first embodiment is the third terminal of the 3-terminal coupled reactor 12, it is the connection terminal of the first and second arms 2u-P and 2u-N in the fourth embodiment of the invention. The other circuit components and the operation principle and the control method of the motor starting method using the inverter 1 are similar to those of the third embodiment described above.

Industrial Applicability

The present invention can be applied to motor starting control in the case of using a modular multilevel inverter for driving a motor. Although the starting torque which can be generated is limited to about 40% of the rated torque when the motor starting method of the present invention is used, the invention can also be applied to control of a square reduction torque load requiring no rated starting torque such as a fan, a blower, or a compressor.

Description of Reference Numerals

| | |
|---|---|
| 1 | modular multilevel inverter |
| 2u-P, 2v-P, 2w-P | first arms |
| 2u-N, 2v-N, 2w-N | second arms |
| 11-1, 11-2, 11-3, 11-4 | chopper cells |
| 11-5, 11-6, 11-7, 11-8 | chopper cells |
| 12 | 3-terminal coupled reactor |
| 12-1, 12-2 | uncoupled reactors |
| C | DC capacitor |
| D | feedback diode |
| S | semiconductor switching element |
| SW1, SW2 | semiconductor switches |

**Claims**

1.  A motor starting method of starting a motor (IM) by using an inverter, the inverter comprising:

    first (2u-P,2v-P,2w-P) and second (2u-N,2v-N,2w-N) arms each arm having two terminals and each arm having chopper cells (11-1,11-4;11-5,11-8), each chopper cell (11-1, 11-4; 11-5, 11-8) including two semiconductor switches (SW1,SW2) connected in series and a DC capacitor (C) connected in parallel to the two semiconductor switches (SW1,SW2), and whose output terminal is a terminal of one of the two semiconductor switches (SW1,SW2), the chopper cells (11-1,11-4) in the first arm (2u-P,2v-P,2w-P) and the same number of the chopper cells (11-5,11-8) in the second arm (2u-N,2v-N,2w-N) being cascaded via the output terminals of the chopper cells (11-1,11-4;11-5,11-8);
    **characterized by**
    a 3-terminal coupled reactor (12) having a first reactor terminal (a), a second reactor terminal (b), and a third reactor terminal (c) positioned on a wiring between the first reactor (a) and second reactor (b) terminals, the first arm (2u-P,2v-P,2w-P) being connected to the first reactor terminal (a), the second arm (2u-N,2v-N,2w-N) being connected to the second reactor terminal (b), and a motor (IM) to be driven being connected to the third reactor terminal (c),
    wherein each of terminals of the first (2u-P,2v-P,2w-P) arms where the 3-terminal coupled reactor (12) is not connected are applied to a first potential side of a DC power source voltage (E), wherein the DC power source voltage (E) is generated from an AC power source voltage having a power source frequency, and
    wherein each of the terminals of the second (2u-N,2v-N,2w-N) arms where the 3-terminal coupled reactor (12) is not connected are applied to a second potential side of the DC power source voltage (E),
    the method comprising:

a first control step of controlling the inverter to make a capacitor voltage instruction value which increases from a first voltage value to a second voltage value, follow an average value of voltages of all of the DC capacitors (C), wherein said first voltage value is larger than a voltage value by which the inverter operates as a PWM converter and said second voltage value is a voltage value by which the inverter can output either an initial voltage to be applied to the motor (IM) or a rated voltage value of the motor (IM); and

a second control step of controlling the capacitor voltage instruction value which increases from the second voltage value to a rated voltage value of the DC capacitor (C) so as to follow voltage of each of the DC capacitors (C) for a predetermined period after the first control step and also controlling a voltage being applied to the motor (IM), which motor voltage either increases from the initial voltage value to the rated voltage value of the motor (IM) and having a predetermined frequency lower than a power source frequency or the motor voltage of the rated voltage value having a predetermined frequency lower than a power source frequency, so as to be output from the third reactor terminal (c) of said 3-terminal coupled reactor (12).

2.  A motor starting method of starting a motor (IM) to be driven by using an inverter comprising:

first (2u-P,2v-P,2w-P) and second (2u-N,2v-N,2w-N) arms each arm having two terminals and each arm having a reactor (12-1; 12-2) and chopper cells (11-1,11-4;11-5,11-8), each chopper cell (11-1, 11-4; 11-5, 11-8) including two semiconductor switches (SW1,SW2) connected in series and a DC capacitor (C) connected in parallel to the two semiconductor switches (SW1,SW2), and whose output terminal is a terminal of one of the two semiconductor switches (SW1,SW2), the chopper cells (11-1,11-4) in the first arm (2u-P,2v-P,2w-P) and the same number of the chopper cells (11-5,11-8) in the second arm (2u-N,2v-N,2w-N) being cascaded via the output terminals of the chopper cells (11-1,11-4;11-5,11-8), and the reactors (12-1;12-2) being connected in an arbitrary position between the cascaded chopper cells (11-1,11-4;11-5,11-8) and the motor (IM), the motor (IM) being connected to the connected terminals of the first (2u-P,2v-P,2w-P) and second (2u-N,2v-N,2w-N) arms, wherein each of terminals of the first (2u-P,2v-P,2w-P) arms where the motor (IM) is not connected are applied to a first potential side of a DC power source voltage (E), wherein the DC power source voltage (E) is generated from an AC power source voltage having a power source frequency, and

wherein each of the terminals of the second (2u-N,2v-N,2w-N) arms where the motor (IM) is not connected are applied to a second potential side of the DC power source voltage (E),

**characterized in that** the method comprising:

a first control step of controlling the inverter to make a capacitor voltage instruction value which increases from a first voltage value to a second voltage value, follow an average value of voltages of all of the DC capacitors (C), wherein said first voltage value is larger than a voltage value by which the inverter operates as a PWM converter and said second voltage value by which the inverter can output either an initial voltage to be applied to the motor (IM) or a rated voltage value of the motor (IM); and

a second control step of controlling the capacitor voltage instruction value which increases from the second voltage value to a rated voltage value of the DC capacitor (C) for a predetermined period after the first control step so as to follow the voltage of each of the DC capacitors (C), and also controlling a voltage being applied to the motor (IM), which motor voltage either increases from the initial voltage value to the rated voltage value of the motor (IM) and having a predetermined frequency lower than a power source frequency or the motor voltage of the rated voltage value having a predetermined frequency lower than a power source frequency, so as to be output from the connection terminal between the first (2u-P,2v-P,2w-P) and second (2u-N,2v-N,2w-N) arms.

3.  The motor starting method according to any one of claims 1 to 2, wherein each of the semiconductor switches (SW1,SW2) has:

a semiconductor switching element (S) passing current in one direction in an on state; and
a feedback diode (D) connected to the semiconductor switching element (S) in inverse parallel.

4.  The motor starting method according to claim 3, further comprising:

a first charging step of turning off each of the semiconductor switches (SW1,SW2) in the inverter before execution of the first control step and charging the DC capacitor (C); and
a second charging step, after the first charging step, of performing a control so that an average value of voltages of all of the DC capacitors (C) reaches the first voltage value.

5. The motor starting method according to claim 4, wherein the control of making the average value of voltages of all of the DC capacitors (C) follow the capacitor voltage instruction value in the second charging step and the first control step includes a control of making a value of a circulating current which is the half of a sum of a current flowing in the first arm (2u-P,2v-P,2w-P) and a current flowing in the second arm (2u-N,2v-N,2w-N) follow the current instruction value generated by using the DC capacitor (C) voltage instruction value and the average value of the voltages of all of the DC capacitors (C).

6. The motor starting method according to claim 4, wherein the control of making the voltage of each of the DC capacitors (C) follow the capacitor voltage instruction value in the second control step includes:

    a control of making an average value of voltages of all of the DC capacitors (C) follow the capacitor voltage instruction value; and
    a control of making the voltage of each of the DC capacitors (C) follow the DC capacitor (C) voltage instruction value.

7. The motor starting method according to claim 6, wherein the control of making the average value of voltages of all of the DC capacitors (C) in the second control step follow the capacitor voltage instruction value includes a control of making a value of a circulating current which is the half of a sum of a current flowing in the first arm (2u-P,2v-P,2w-P) and a current flowing in the second arm (2u-N,2v-N,2w-N) follow the current instruction value generated by using the DC capacitor (C) voltage instruction value and the average value of the voltages of all of the DC capacitors (C).

8. The motor starting method according to any one of claims 1 to 2, wherein when a voltage value of a power source on the DC side of the inverter is E, the second voltage value is $v_C{}^*$, and the total number of the chopper cells (11-1,11-4;11-5,11-8) of the first (2u-P,2v-P,2w-P) and second (2u-N,2v-N,2w-N) arms is 2n (where n is an integer), a line voltage effective value V of the initial voltage value satisfies a relation expression of

$$V = n \times \sqrt{\frac{3}{2}}\left(v_c{}^* - \frac{E}{2n}\right)$$

## Patentansprüche

1. Motorstartverfahren zum Starten eines Motors (IM) unter Verwendung eines Wechselrichters, wobei der Wechselrichter umfasst:

    erste (2u-P,2v-P,2w-P) und zweite (2u-N,2v-N,2w-N) Arme, wobei jeder Arm zwei Anschlüsse hat und jeder Arm Wechselrichterzellen (11-1,11-4; 11-5,11-8) hat, wobei jede Wechselrichterzelle (11-1,11-4; 11-5,11-8) zwei in Reihe geschaltete Halbleiterschalter (SW1,SW2) und eine parallel zu den beiden Halbleiterschaltern (SW1,SW2) geschaltete Gleichstromkapazität (C) enthält, und deren Ausgangsanschluss ein Anschluss eines der beiden Halbleiterschalter (SW1,SW2) ist, wobei die Wechselrichterzellen (11-1,11-4) in dem ersten Arm (2u-P,2v-P,2w-P) und die gleiche Anzahl der Wechselrichterzellen (11-5,11-8) in dem zweiten Arm (2u-N,2v-N,2w-N) über die Ausgangsanschlüsse der Wechselrichterzellen (11-1,11-4; 11-5,11-8) kaskadiert sind;
    **gekennzeichnet durch**
    eine mit drei Anschlüssen versehene verbundene Spule (12) mit einem ersten Spulenanschluss (a), einem zweiten Spulenanschluss (b) und einem an einer Leitung zwischen dem ersten Spulenanschluss (a) und dem zweiten Spulenanschluss (b) angeordneten dritten Spulenanschluss (c), wobei der erste Arm (2u-P,2v-P,2w-P) mit dem ersten Spulenanschluss (a), der zweite Arm (2u-N,2v-N,2w-N) mit dem zweiten Spulenanschluss(b) und ein anzutreibender Motor (IM) mit dem dritten Spulenanschluss(c) verbunden ist,
    wobei jeder der Anschlüsse der ersten Arme (2u-P,2v-P,2w-P), mit denen die mit drei Anschlüssen versehene verbundene Spule (12) nicht verbunden ist, an eine erste Potentialseite einer Spannung (E) einer Gleichspannungsquellen angelegt sind, wobei die Spannung (E) der Gleichspannungsquelle aus einer Spannung einer Wechselspannungsquelle, die eine Leistungsquellenfrequenz hat, erzeugt wird, und
    wobei jeder der Anschlüsse der zweiten Arme (2u-N,2v-N,2w-N), mit denen die mit drei Anschlüssen versehene verbundene Spule (12) nicht verbunden ist, an eine zweite Potentialseite der Spannung (E) der Gleichspannungsquelle angelegt ist,
das Verfahren umfasst:

einen ersten Steuerschritt zum Steuern des Wechselrichters, bei dem ein von einem ersten Spannungswert auf einen zweiten Spannungswert ansteigender Kapazitätsspannungssollwert einem Mittelwert von Spannungen aller Gleichstromkapazitäten (C) folgt, wobei der erste Spannungswert größer ist als ein Spannungswert, bei dem der Wechselrichter als PWM-Umrichter arbeitet, und der zweiten Spannungswert ein Spannungswert ist, bei dem der Wechselrichter entweder eine an den Motor (IM) abzugebende Anfangsspannung oder einen Nennspannungswert des Motors (IM) ausgeben kann; und

einen zweiten Steuerschritt zum Steuern des von dem zweiten Spannungswert auf einen Nennspannungswert der Gleichstromkapazität (C) ansteigenden Kapazitätspannungssollwerts, um für einen vorbestimmten Zeitraum nach dem ersten Steuerschritt der Spannung von jeder der Gleichstromkapazitäten (C) zu folgen, und außerdem Steuern einer an den Motor (IM) bereitgestellten Spannung, wobei die Motorspannung entweder von dem Spannungsanfangswert auf den Nennspannungswert des Motors (IM) ansteigt und eine vorgegebenen Frequenz niedriger als eine Leistungsquellenfrequenz hat, oder auf die Motorspannung des Nennspannungswerts ansteigt und eine vorgegebenen Frequenz niedriger als eine Leistungsquellenfrequenz hat, um an dem dritten Spulenanschluss (c) der mit drei Anschlüssen versehene verbundene Spule (12) ausgegeben zu werden.

2. Motorstartverfahren zum Starten eines Motors (IM) unter Verwendung eines Wechselrichters, wobei der Wechselrichter umfasst:

erste (2u-P,2v-P,2w-P) und zweite (2u-N,2v-N,2w-N) Arme, wobei jeder Arm zwei Anschlüsse hat und jeder Arm Wechselrichterzellen (11-1,11-4; 11-5,11-8) hat, wobei jede Wechselrichterzelle (11-1,11-4; 11-5,11-8) zwei in Reihe geschaltete Halbleiterschalter (SW1,SW2) und eine parallel zu den beiden Halbleiterschaltern (SW1,SW2) geschaltete Gleichstromkapazität (C) enthält, und deren Ausgangsanschluss ein Anschluss eines der beiden Halbleiterschalter (SW1,SW2) ist, wobei die Wechselrichterzellen (11-1,11-4) in dem ersten Arm (2u-P,2v-P,2w-P) und die gleiche Anzahl der Wechselrichterzellen (11-5,11-8) in dem zweiten Arm (2u-N,2v-N,2w-N) über die Ausgangsanschlüsse der Wechselrichterzellen (11-1,11-4; 11-5,11-8) kaskadiert sind, und wobei die Spulen (12-1; 12-2) in einer beliebigen Position zwischen den kaskadierten Wechselrichterzellen (11-1,11-4; 11-5,11-8) und dem Motor (IM) verbunden sind, wobei der Motor (IM) mit den verbundenen Anschlüssen der ersten (2u-P,2v-P,2w-P) und zweiten (2u-N,2v-N,2w-N) Arme verbunden ist, wobei jeder der Anschlüsse der ersten Arme (2u-P,2v-P,2w-P), mit denen der Motor (IM) nicht verbunden ist, an eine erste Potentialseite einer Gleichspannungsquellenspannung (E) angelegt ist, wobei die Spannung (E) einer Gleichspannungsquelle aus einer Spannung einer Wechselspannungsquelle, die eine Leistungsquellenfrequenz hat, erzeugt wird, und wobei jeder der Anschlüsse der zweiten Arme (2u-N,2v-N,2w-N), mit denen der Motor (IM) nicht verbunden ist, an eine zweite Potentialseite der Spannung (E) der Gleichspannungsquelle angelegt ist, **dadurch gekennzeichnet, dass** das Verfahren umfasst:

einen ersten Steuerschritt zum Steuern des Wechselrichters, bei dem ein von einem ersten Spannungswert auf einen zweiten Spannungswert ansteigender Kapazitätsspannungssollwert einem Mittelwert von Spannungen aller Gleichstromkapazitäten (C) folgt, wobei der erste Spannungswert größer ist als ein Spannungswert, bei dem der Wechselrichter als PWM-Umrichter arbeitet, und der zweiten Spannungswert ein Spannungswert ist, bei dem der Wechselrichter entweder eine an den Motor (IM) abzugebende Anfangsspannung oder einen Nennspannungswert des Motors (IM) ausgeben kann; und einen zweiten Steuerschritt zum Steuern des von dem zweiten Spannungswert auf einen Nennspannungswert der Gleichstromkapazität (C) ansteigenden Kapazitätspannungssollwerts, um für einen vorbestimmten Zeitraum nach dem ersten Steuerschritt der Spannung von jeder der Gleichstromkapazitäten (C) zu folgen, und außerdem Steuern einer an den Motor (IM) bereitgestellten Spannung, wobei die Motorspannung entweder von dem Spannungsanfangswert auf den Nennspannungswert des Motors (IM) ansteigt und eine vorgegebenen Frequenz niedriger als eine Leistungsquellenfrequenz hat, oder auf die Motorspannung des Nennspannungswerts ansteigt und eine vorgegebenen Frequenz niedriger als eine Leistungsquellenfrequenz hat, um an dem Verbindungsanschluss zwischen dem ersten (2u-P,2v-P,2w-P) und zweiten (2u-N,2v-N,2w-N) Arm ausgegeben zu werden.

3. Motorstartverfahren nach einem der Ansprüche 1 oder 2, wobei jeder der Halbleiterschalter (SW1,SW2) aufweist:

ein Halbleiterschaltelement (S), das in einem eingeschalteten Zustand Strom in einer Richtung durchlässt; und eine antiparallel an das Halbleiterschaltelement (S) angeschlossene Rücklaufdiode (D).

4. Motorstartverfahren nach Anspruch 3, weiter umfassend:

einen ersten Ladeschritt, in dem jeder der Halbleiterschalter (SW1,SW2) des Wechselrichters vor der Ausführung des ersten Steuerschritts ausgeschaltet und der Gleichstromkapazität (C) geladen werden; und einen zweiten Ladeschritt nach dem ersten Ladeschritt, in dem eine Steuerung so ausgeführt wird, dass ein Mittelwert von Spannungen aller Gleichstromkapazitäten (C) den ersten Spannungswert erreicht.

5. Motorstartverfahren nach Anspruch 4, wobei die Steuerung, bei welcher der Mittelwert der Spannungen aller Gleichstromkapazitäten (C) dem Kapazitätsspannungssollwert in dem zweiten Steuerschritt und dem ersten Steuerschritt folgt, eine Steuerung umfasst, bei der ein Wert eines zirkulierenden Stroms, der die Hälfte der Summe aus einem in dem ersten Arm (2u-P,2v-P,2w-P) und dem zweiten Arm (2u-N,2v-N,2w-N) fließenden Strom ist, dem unter Verwendung des Spannungssollwerts der Gleichstromkapazität (C) und dem Mittelwert der Spannungen aller Gleichstromkapazitäten (C) erzeugten Stromsollwert folgt.

6. Motorstartverfahren nach Anspruch 4, wobei die Steuerung, mit welcher die Spannungen einer jeder der Gleichstromkapazitäten (C) dem Kapazitätsspannungssollwert in dem zweiten Steuerschritt folgt, umfasst:

eine Steuerung, bei der ein Mittelwert von Spannungen aller Gleichstromkapazitäten (C) dem Kapazitätsspannungssollwert folgt; und eine Steuerung, bei der die Spannung jeder der Gleichstromkapazitäten (C) dem Spannungssollwert der Gleichstromkapazitäten (C) folgt.

7. Motorstartverfahren nach Anspruch 6, wobei die Steuerung, bei welcher der Mittelwert der Spannungen aller Gleichstromkapazitäten (C) dem Kapazitätsspannungssollwert in dem zweiten Steuerschritt folgt, eine Steuerung umfasst, bei der ein Wert eines zirkulierenden Stroms, der die Hälfte der Summe aus einem in dem ersten Arm (2u-P,2v-P,2w-P) und dem zweiten Arm (2u-N,2v-N,2w-N) fließenden Strom ist, dem unter Verwendung des Spannungssollwerts der Gleichstromkapazität (C) und dem Mittelwert der Spannungen aller Gleichstromkapazitäten (C) erzeugten Stromsollwert folgt.

8. Motorstartverfahren nach einem der Ansprüche 1 oder 2, wobei, wenn ein Spannungswert einer Leistungsquelle auf der Gleichstromseite des Wechselrichters E ist, der zweite Spannungswert $v_C{}^*$ ist, und die Gesamtzahl der Wechselrichterzellen (11-1,11-4; 11-5,11-8) der ersten (2u-P,2v-P,2w-P) und der zweiten (2u-N,2v-N,2w-N) Arme 2n ist (wobei n eine ganze Zahl ist), und wobei ein Leiterspannungseffektivwert V des Anfangsspannungswert die Beziehung

$$V = n \times \sqrt{\frac{3}{2}} \left( v_C{}^* - \frac{E}{2n} \right)$$

erfüllt.

## Revendications

1. Procédé de démarrage de moteur permettant de démarrer un moteur (IM) en utilisant un onduleur, l'onduleur comprenant :

des premières (2u-P, 2v-P, 2w-P) et secondes (2u-N, 2v-N, 2w-N) branches, chaque branche comportant deux bornes et chaque branche comportant des cellules de découpage (11-1, 11-4; 11-5, 11-8), chaque cellule de découpage (11-1, 11-4; 11-5, 11-8) comportant deux commutateurs à semi-conducteur (SW1, SW2) raccordés en série et un condensateur polarisé (C) raccordé en parallèle sur les deux commutateurs à semi-conducteur (SW1, SW2), et dont la borne de sortie est une borne de l'un des deux commutateurs à semi-conducteur (SW1, SW2), les cellules de découpage (11-1, 11-4) sur les premières branches (2u-P, 2v-P, 2w-P) et le même nombre de cellules de découpage (11-5, 11-8) sur les secondes branches (2u-N, 2v-N, 2w-N) sont agencées en cascade par l'intermédiaire des bornes de sortie des cellules de découpage (11-1, 11-4 ; 11-5, 11-8) ;
**caractérisé par**
une réactance couplée à 3 bornes (12) comportant une première borne de réactance (a), une deuxième borne de réactance (b), et une troisième borne de réactance (c) positionnées sur un circuit de câblage entre les première borne de réactance (a) et deuxième borne de réactance (b), la première branche (2u-P, 2v-P, 2w-P) étant raccordée à la première borne de réactance (a), la seconde branche (2u-N, 2v-N, 2w-N) étant raccordée à la deuxième borne de réactance (b), et un moteur (IM) à alimenter étant raccordé à la troisième borne de réactance (c),
dans lequel chacune des bornes des premières branches (2u-P, 2v-P, 2w-P) à laquelle la réactance couplée à 3 bornes (12) n'est pas raccordée est raccordée à un première borne de potentiel d'une tension de source d'alimentation continue (E), dans lequel la tension de source d'alimentation continue (E) est produite à partir d'une tension de source d'alimentation alternative présentant une fréquence de source d'alimentation, et
dans lequel chacune des bornes des secondes branches (2u-N, 2v-N, 2w-N) à laquelle la réactance couplée à 3 bornes (12) n'est pas raccordée est raccordée à une seconde borne de potentiel de la tension de source d'alimentation continue (E),
le procédé comprenant :

une première étape de commande destinée à commander l'onduleur afin d'obtenir qu'une valeur de consigne de tension de condensateur qui augmente à partir d'une première valeur de tension vers une seconde valeur de tension, suive une valeur moyenne des tensions de l'ensemble des condensateurs polarisés (C), dans lequel ladite première valeur de tension est supérieure à une valeur de tension avec laquelle l'onduleur fonctionne en convertisseur à modulation de largeur d'impulsion (PWM) et ladite seconde valeur de tension est une valeur de tension avec laquelle l'onduleur peut délivrer soit une tension initiale à appliquer sur le moteur (IM) soit une valeur de tension nominale du moteur (IM) ; et
une seconde étape de commande destinée à commander la valeur de consigne de tension de condensateur qui augmente à partir de la seconde valeur de tension jusqu'à une valeur de tension nominale du condensateur polarisé (C) de manière à suivre la tension de chacun des condensateurs polarisés (C) pendant une période prédéterminée après la première étape de commande, et aussi à commander une tension appliquée au moteur (IM), laquelle tension de moteur, soit augmente à partir de la valeur de tension initiale jusqu'à la valeur de tension nominale du moteur (IM) et présente une fréquence prédéterminée inférieure à une fréquence de source d'alimentation, soit la tension de moteur de la valeur de tension nominale présente une fréquence prédéterminée inférieure à une fréquence de source d'alimentation, de manière à être délivrée à partir de la troisième borne de réactance (c) de ladite réactance couplée à 3 bornes (12).

2.  Procédé de démarrage de moteur permettant de démarrer un moteur (IM) destiné à être alimenté en utilisant un onduleur comprenant :

des premières (2u-P, 2v-P, 2w-P) et secondes (2u-N, 2v-N, 2w-N) branches, chaque branche comportant deux bornes et chaque branche comportant une réactance (12-1 ; 12-2) et des cellules de découpage (11-1, 11-4 ; 11-5, 11-8), chaque cellule de découpage (11-1, 11-4 ; 11-5, 11-8) comportant deux commutateurs à semi-conducteur (SW1, SW2) raccordés en série et un condensateur polarisé (C) raccordé en parallèle sur les deux commutateurs à semi-conducteur (SW1, SW2), et dont la borne de sortie est une borne de l'un des deux commutateurs à semi-conducteur (SW1, SW2), les cellules de découpage (11-1, 11-4) sur les premières branches (2u-P, 2v-P, 2w-P) et le même nombre de cellules de découpage (11-5, 11-8) sur les secondes branches (2u-N, 2v-N, 2w-N) étant montées en cascade par l'intermédiaire des bornes de sortie des cellules de découpage (11-1, 11-4; 11-5, 11-8), et les réactances (12-1 ; 12-2) étant raccordées dans une position arbitraire entre les cellules de découpage (11-1, 11-4 ; 11-5, 11-8) agencées en cascade et le moteur (IM), le moteur (IM) étant raccordé aux bornes raccordées des premières (2u-P, 2v-P, 2w-P) et secondes (2u-N, 2v-N, 2w-N) branches,
dans lequel chacune des bornes des premières (2u-P, 2v-P, 2w-P) branches à laquelle le moteur (IM) n'est pas raccordé est raccordée à une première borne de potentiel d'une tension de source d'alimentation continue (E), dans lequel la tension de source d'alimentation continue (E) est produite à partir d'une tension de source d'alimentation alternative présentant une fréquence de source d'alimentation, et
dans lequel chacune des bornes des secondes (2u-N, 2v-N, 2w-N) branches à laquelle le moteur (IM) n'est pas raccordé est raccordée à une seconde borne de potentiel de la tension de source d'alimentation continue (E),
**caractérisé en ce que** le procédé comprend :

une première étape de commande destinée à commander l'onduleur afin d'obtenir qu'une valeur de consigne de tension de condensateur qui augmente à partir d'une première valeur de tension vers une seconde valeur de tension, suive une valeur moyenne des tensions de l'ensemble des condensateurs polarisés (C), dans lequel ladite première valeur de tension est supérieure à une valeur de tension avec laquelle l'onduleur fonctionne en convertisseur PWM et ladite seconde valeur de tension avec laquelle l'onduleur peut délivrer soit une tension initiale à appliquer sur le moteur (IM) soit une valeur de tension nominale du moteur (IM) ; et une seconde étape de commande destinée à commander la valeur de consigne de tension de condensateur qui augmente à partir de la seconde valeur de tension jusqu'à une valeur de tension nominale du condensateur polarisé (C) pendant une période prédéterminée après la première étape de commande de manière à suivre la tension de chacun des condensateurs polarisés (C), et aussi à commander une tension qui est appliquée sur le moteur (IM), laquelle tension de moteur soit augmente à partir de la valeur de tension initiale jusqu'à la valeur de tension nominale du moteur (IM) et présente une fréquence prédéterminée inférieure à une fréquence de source d'alimentation soit la tension de moteur de la valeur de tension nominale présente une fréquence prédéterminée inférieure à une fréquence de source d'alimentation, de manière à être délivrée à partir de la borne de liaison entre les premières (2u-P, 2v-P, 2w-P) et secondes (2u-N, 2v-N, 2w-N) branches.

3. Procédé de démarrage de moteur selon l'une quelconque des revendications 1 à 2, dans lequel chacun des commutateurs à semi-conducteur (SW1, SW2) comporte :

   un élément de commutation à semi-conducteur (S) assurant le passage d'un courant dans un premier sens dans un état actif ; et
   une diode de protection (D) raccordée à l'élément de commutation à semi-conducteur (S) parallèlement et en sens inverse.

4. Procédé de démarrage de moteur selon la revendication 3, comprenant en outre :

   une première étape de charge consistant à désactiver chacun des commutateurs à semi-conducteur (SW1, SW2) sur l'onduleur avant l'exécution de la première étape de commande et à charger le condensateur polarisé (C) ; et
   une seconde étape de charge, après la première étape de charge, consistant à exécuter une commande de telle sorte qu'une valeur moyenne des tensions de l'ensemble des condensateurs polarisés (C) atteigne la première valeur de tension.

5. Procédé de démarrage de moteur selon la revendication 4, dans lequel la commande destinée à obtenir que la valeur moyenne des tensions de l'ensemble des condensateurs polarisés (C) suive la valeur de consigne de tension de condensateur dans la seconde étape de charge et la première étape de commande comporte une commande destinée à obtenir qu'une valeur d'un courant de circulation qui est égal à la moitié d'une somme d'un courant circulant dans les premières branches (2u-P, 2v-P , 2w-P) et d'un courant circulant dans les secondes branches (2u-N, 2v-N, 2w-N) suive la valeur de consigne de courant produite en utilisant la valeur de consigne de tension de condensateur polarisé (C) et la valeur moyenne des tensions de l'ensemble des condensateurs polarisés (C).

6. Procédé de démarrage de moteur selon la revendication 4, dans lequel la commande destinée à obtenir que la tension de chacun des condensateurs polarisés (C) suive la valeur de consigne de tension de condensateur dans la seconde étape de commande comporte :

   une commande destinée à obtenir qu'une valeur moyenne des tensions de l'ensemble des condensateurs polarisés (C) suive la valeur de consigne de tension de condensateur ; et
   une commande destinée à obtenir que la tension de chacun des condensateurs polarisés (C) suive la valeur de consigne de tension de condensateur polarisé (C).

7. Procédé de démarrage de moteur selon la revendication 6, dans lequel la commande destinée à obtenir que la valeur moyenne des tensions de l'ensemble des condensateurs polarisés (C) dans la seconde étape de commande suive la valeur de consigne de tension de condensateur comporte :

   une commande destinée à obtenir qu'une valeur d'un courant de circulation qui est égal à la moitié d'une somme d'un courant circulant dans les premières branches (2u-P, 2v-P, 2w-P) et d'un courant circulant dans les secondes branches (2u-N, 2v-N, 2w-N) suive la valeur de consigne de courant produite en utilisant la valeur de consigne de tension de condensateur polarisé (C) et la valeur moyenne des tensions de l'ensemble des condensateurs polarisés (C).

8. Procédé de démarrage de moteur selon l'une quelconque des revendications 1 et 2, dans lequel lorsqu'une valeur de tension d'une source d'alimentation du côté continu de l'onduleur est égale à E, la seconde valeur de tension est égale à $v_C^*$, et le nombre total des cellules de découpage (11-1, 11-4 ; 11-5, 11-8) des premières (2u-P, 2v-P, 2w-P) et secondes (2u-N, 2v-N, 2w-N) branches est égal à 2n (où n est un entier), une valeur efficace de tension de ligne V de la valeur de tension initiale satisfait une relation d'expression :

$$V = n \times \sqrt{\frac{3}{2}\left(v_C^* - \frac{E}{2n}\right)}$$

.

# Fig.1

```
                    ┌──────────────┐
                    │    START     │
                    └──────┬───────┘
                           ↓
         ┌─────────────────────────────────────┐
         │   INITIALLY CHARGE DC CAPACITOR      │──── S101
         └─────────────────┬───────────────────┘
                           ↓
         ┌─────────────────────────────────────┐
         │ CHARGE DC CAPACITOR TO FIRST VOLTAGE │──── S102
         │ AT WHICH INVERTER OPERATES AS PWM    │
         │ CONVERTER                            │
         └─────────────────┬───────────────────┘
                           ↓
         ┌─────────────────────────────────────┐
         │ PERFORM CONTROL SO THAT AVERAGE      │
         │ VALUE OF VOLTAGES OF ALL OF DC       │──── S103
         │ CAPACITORS FOLLOWS VOLTAGE           │
         │ INSTRUCTION VALUE INCREASING FROM    │
         │ FIRST VOLTAGE TO SECOND VOLTAGE      │
         └─────────────────┬───────────────────┘
                           ↓
  ┌──────────────────────────────────────────────────┐
  │ ·PERFORM CONTROL SO THAT VOLTAGE OF EACH OF DC    │
  │  CAPACITORS FOLLOWS VOLTAGE INSTRUCTION VALUE     │
  │  INCREASING FROM SECOND VOLTAGE TO RATED VOLTAGE  │──── S104
  │  VALUE                                            │
  │ ·PERFORM CONTROL SO THAT VOLTAGE INCREASING FROM  │
  │  INITIAL VOLTAGE VALUE TO RATED VOLTAGE VALUE AND │
  │  HAVING PREDETERMINED FREQUENCY IS OUTPUT FROM    │
  │  INVERTER                                         │
  └─────────────────────┬────────────────────────────┘
                        ↓
               TO STEADY OPERATION
```

Fig.2

EP 2 485 384 B1

# Fig.3

# Fig.4

# Fig.5

# Fig.6

Fig.7

Fig.8

# Fig.9

```
        ┌─────────────┐
        │    START    │
        └──────┬──────┘
               ↓
┌──────────────────────────────────┐
│   INITIALLY CHARGE DC CAPACITOR   │────S201
└──────────────────┬───────────────┘
                   ↓
┌──────────────────────────────────┐
│  CHARGE DC CAPACITOR TO FIRST     │
│  VOLTAGE AT WHICH INVERTER        │────S202
│  OPERATES AS PWM CONVERTER        │
└──────────────────┬───────────────┘
                   ↓
┌──────────────────────────────────────────┐
│  PERFORM CONTROL SO THAT AVERAGE VALUE OF  │
│  VOLTAGES OF ALL OF DC CAPACITORS FOLLOWS  │────S203
│  VOLTAGE INSTRUCTION VALUE INCREASING      │
│  FROM FIRST VOLTAGE TO SECOND VOLTAGE      │
└──────────────────┬─────────────────────────┘
```

PERFORM CONTROL SO THAT AVERAGE VALUE OF VOLTAGES OF ALL OF DC CAPACITORS FOLLOWS VOLTAGE INSTRUCTION VALUE INCREASING FROM FIRST VOLTAGE TO SECOND VOLTAGE — S203

- PERFORM CONTROL SO THAT VOLTAGE OF EACH OF DC CAPACITORS FOLLOWS VOLTAGE INSTRUCTION VALUE INCREASING FROM SECOND VOLTAGE TO RATED VOLTAGE VALUE
- PERFORM CONTROL SO THAT VOLTAGE HAVING RATED VOLTAGE VALUE AND PREDETERMINED FREQUENCY IS OUTPUT FROM INVERTER

— S204

TO STEADY OPERATION

Fig.10

# Fig.11

# Fig.12

# Fig.13

CURRENT MINOR LOOP

$v_C^*$ $+$ $-$ $v_{Cuave}$ $\boxed{K_1 + \dfrac{K_2}{s}}$ $i_{Zu}^*$ $-$ $+$ $\boxed{K_3 + \dfrac{K_4}{s}}$ $v_{Au}^*$

$i_{Pu}$ $+$ $+$ $i_{Nu}$ $\boxed{\dfrac{1}{2}}$ $i_{Zu}$

# Fig.14

$v_C^*$ $+$ $-$ $v_{Cju}$ $(j:1\sim8)$ $\boxed{K_5}$ $\otimes$ $v_u^*$ $\boxed{\pm1}$ $v_{Bju}^*$

$\begin{pmatrix} +1 : j = 1\sim4 \\ -1 : j = 5\sim8 \end{pmatrix}$

# Fig.15

(a) $v_{Au}^*$ $+$ $+$ $+$ $-$ $+$ $+$ $v_{ju}^*$ $(j:1\sim4)$

$v_{Bju}^*$ $v_u^*/4$ $E/8$

(b) $v_{Au}^*$ $+$ $+$ $+$ $+$ $+$ $+$ $v_{ju}^*$ $(j:5\sim8)$

$v_{Bju}^*$ $v_u^*/4$ $E/8$

# Fig.16

EP 2 485 384 B1

# Fig.17

(a)

CHOPPER CELL 11-1

CHOPPER CELL

12-1

11-4

(b)

12-1

CHOPPER CELL 11-1

CHOPPER CELL

11-4

(c)

CHOPPER CELL 11-1

12-1

CHOPPER CELL

11-4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 20080310205 A

### Non-patent literature cited in the description

• **YOSUKE KONDO ; HATTI NATCHPONG ; HIROFUMI AKAGI.** Induction Motor Variable Drive System by 5-Level Diode-Clamped PWM Rectifier and Inverter. *IEEJ Transactions on Industrial Applications,* 2008, vol. 128 (3), 259-266

• **MAKOTO HAGIWARA ; HIROFUMI AKAGI.** PWM Control Method and Operation Verification of Modular Multilevel Converter (MMC). *IEEJ Transactions on Industrial Applications,* July 2008, vol. 128 (7), 957-965

• **KAZUTOSHI NISHIMURA ; MAKOTO HAGIWARA ; HIROFUMI AKAGI.** Application to High-Voltage Motor Drive System using Modular Multilevel PWM Inverter, Experimental Verification by 400V, 15 kW Mini Model. *Technical Meeting on Semiconductor Power Conversion,* January 2009, 19-24

• **MAKOTO HAGIWARA ; HIROFUMI AKAGI.** PWM Control and Experiment of Modular Multilevel Converters. *Power electronics specialists conference,* 15 June 2008, 154-161